# EUROPEAN PATENT APPLICATION

(11) **EP 4 411 339 A1**
(43) Date of publication of application: **07.08.2024**
(21) Application number: 22874841.4
(22) Date of filing: 26.09.2022
(51) Int. Cl.: G01N 1/31

(54) **AUTOMATIC STAINING SYSTEM AND TISSUE SECTION STAINING METHOD**

(30) Priority: 29.09.2021 CN 202111154936
(71) Applicant: Guangzhou Wondfo Biotech Co., Ltd., Guangzhou, Guangdong 510663 (CN)
(72) Inventor: ZHU, Haike, Guangzhou, Guangdong 510663 (CN); LAI, Yuanqiang, Guangzhou, Guangdong 510663 (CN); HU, Zhanshuo, Guangzhou, Guangdong 510663 (CN); XIE, Tangkai, Guangzhou, Guangdong 510663 (CN); LU, Yinhui, Guangzhou, Guangdong 510663 (CN)
(74) Representative: Jacob, Reuben Ellis
(86) International application number: PCT/CN2022/121307
(87) International publication number: WO 2023/051456

(57) **Abstract**

The present invention discloses an automatic staining system and a tissue section staining method. The automatic staining system comprises a mounting frame and at least one staining device, wherein the mounting frame is provided with at least one first channel; and the staining devices are arranged in a one-to-one correspondence with the first channels, and each staining device is independently and movably inserted into one first channel. According to technical solutions provided by the automatic staining system and the tissue section staining method, according to staining requirements, any staining device can be independently pulled out of one of the first channels for an operation of loading, unloading or cleaning. In this case, the other staining devices which are not pulled out relative to the first channels are not affected, and can still be inserted into the first channels for staining operations, so that instrument resources can be fully used, the working efficiency can be improved, the use flexibility of the automatic staining system can be improved, and an influence on the result of staining can be effectively avoided, thereby preventing a section from scrapping.

## Description

The present invention claims priority to Chinese patent application No. 202111154936.6, filed with the China National Intellectual Property Administration on September 29, 2021 and entitled "AUTOMATIC STAINING SYSTEM AND TISSUE SECTION STAINING METHOD", which is incorporated herein by reference in its entirety.

### Technical Field

The present invention relates to the technical field of in vitro diagnosis, and in particular, to an automatic staining system and a tissue section staining method.

### Background Art

Pathological diagnosis is a method to detect expressions of target proteins or nucleic acids by processing and staining a diseased tissue and outlining morphological changes of cells and nuclei, so as to diagnose a disease and a morphological structure, functional metabolism changes and disease prognosis of a diseased body during the disease process, which can provide a necessary theoretical basis and practical basis for diagnosis, treatment and prevention of diseases.

At present, a pathological section staining machine on the market cannot add a slide and a new staining process after a staining process starts, even if there is a staining unit in an idle state. If it is necessary to add a slide, the process needs to be suspended, which will affect the result of staining or even cause a section to be scrapped.

### Summary of the Invention

An objective of the present invention is to provide an automatic staining system and a tissue section staining method, to overcome the shortcoming that a pathological section staining machine in the prior art cannot add a slide and a staining process operation in the region of an idle staining unit after a staining process starts so that the process needs to be suspended, which will affect the result of staining or even cause a section to be scrapped.

A technical solution thereof is as follows:
an automatic staining system, comprising a mounting frame and at least one staining device, wherein
the mounting frame is provided with at least one first channel; and the staining devices are arranged in a one-to-one correspondence with the first channels, and each staining device is independently and movably inserted into one first channel.

In one embodiment, the automatic staining system further comprises at least one reagent storage device, wherein
the mounting frame is further provided with at least one second channel; and the reagent storage devices are arranged in a one-to-one correspondence with the second channels, and each reagent storage device is independently and movably inserted into one second channel.

In one embodiment, the automatic staining system further comprises a first sliding pair, wherein the first sliding pair comprises a first slide rail and a first sliding member; and
the first slide rail is arranged in the first channel, the staining device is arranged on the first sliding member, and the first sliding member is slidably arranged in the first slide rail.

In one embodiment, the mounting frame is provided with a first magnetic member at an inner end of the first channel, the staining device is provided with a second magnetic member magnetically cooperating with the first magnetic member, and the staining device is magnetically positioned with the first magnetic member by means of the second magnetic member after being pushed into the first channel.

In one embodiment, the mounting frame is further provided with a buffer member that is at the same level as the staining device at the inner end of the first channel, and the staining device abuts against the buffer member after being pushed into the first channel.

In one embodiment, the automatic staining system further comprises a first self-locking device, wherein when the staining device is pushed into the first channel and/or pushed out of the first channel, the staining device and the mounting frame form a locked state by means of the first self-locking device.

In one embodiment, the automatic staining system further comprises a damping device, wherein the damping device comprises a first gear and a second gear, the first gear is arranged at the mounting frame and is located in the first channel, the second gear is arranged on the staining device, and the staining device rotates with the mounting frame by meshing the first gear with the second gear.

In one embodiment, the staining device comprises a push-pull device; the push-pull device comprises a push-pull body and a panel; and
the push-pull body is movably arranged in the first channel, the panel is arranged at an outer end of the push-pull body, the panel is arranged outside the first channel, and at least a partial structure of the panel is movable to a first position or a second position relative to the push-pull body.

In one embodiment, the panel comprises a first push body arranged in a height direction of the push-pull body and a second push body rotatably connected to the first push body, and the first push body is connected to the push-pull body; and when the push-pull body is in a pulled-out state or a pushed-in state, the second push body rotates to the first position or the second position.

In one embodiment, the push-pull device further comprises a swinging device connected to the second push body, the swinging device drives the second push body to flip between the push-pull body and the first push body, a limit position of the second push body when flipped to approach the push-pull body is the first position, and a limit position of the second push body when flipped to approach the first push body is the second position.

In one embodiment, the swinging device comprises a linkage assembly, a first guide member, and a second guide member; the first guide member is arranged in the first channel, and the second guide member is arranged on the second push body; and
the linkage assembly is connected to the push-pull body, a first end and a second end of the linkage assembly are respectively in contact with the first guide member and the second guide member, and when the push-pull body moves along the first channel, the first end of the linkage assembly moves along the first guide member to drive the second end of the linkage assembly to move along the second guide member so as to drive the second push body to flip.

In one embodiment, the first guide member has a first bevel portion, and the height of a first end of the first bevel portion close to the panel is less than the height of a second end of the first bevel portion away from the panel;
the first end of the linkage assembly has a first moving portion, and the second end thereof has a second moving portion;
the second guide member has a second bevel portion obliquely arranged in an extension direction from the first push body to the second push body, and the height of a first end of the second bevel portion close to the first push body is less than the height of a second end of the second bevel portion away from the first push body; and when the push-pull body moves along the first channel, the first moving portion moves along the first bevel portion to drive the linkage assembly to move up and down, and the second end of the linkage assembly moves along the second bevel portion by means of the second moving body to drive the second push body to swing.

In one embodiment, the push-pull device further comprises a torsion structure;
the torsion structure comprises a rotating shaft and a torsion spring, and the second push body is rotatably connected to the first push body by means of the rotating shaft; and joints of the first push body and the second push body on a side close to the push-pull body are connected to each other via the torsion spring, such that the second push body forms a torsion force for flipping towards the push-pull body.

In one embodiment, the reagent storage device comprises a rack, at least one reading module, and at least one transmitting module; the rack is movably inserted into the second channel; the reading module is arranged on the mounting frame and corresponds to the second channel; and
the at least one transmitting module is arranged on the rack, and when the rack moves to below the reading module, the reading module is arranged opposite the transmitting module.

In one embodiment, the automatic staining system further comprises a second sliding pair, wherein the second sliding pair comprises a second slide rail and a second sliding member; and the second slide rail is arranged on the second channel, the rack is arranged on the second sliding member, and the second sliding member is slidably arranged in the second slide rail.

In one embodiment, the reading module is an RFID reading module; and the transmitting module is an RFID chip.

In one embodiment, the automatic staining system further comprises a locking device, wherein when the rack is pushed into the second channel and/or pushed out of the second channel, the rack and the mounting frame form a locked state by means of the locking device.

In one embodiment, the mounting frame is provided with an optocoupler switch inside the second channel, and the optocoupler switch is configured to detect whether the rack is pushed inwardly to an inner end of the second channel.

In one embodiment, the reagent storage device comprises a reagent bottle; the reagent bottle comprises a body, a bottle cap, a first fitting member, and a second fitting member;
the body has an accommodating cavity and a first opening in communication with the accommodating cavity, and the bottle cap movably covers the first opening of the body;
the first fitting member is arranged on the body, and the second fitting member is arranged on the bottle cap; and when the bottle cap moves to be opened relative to the first opening of the body, the bottle cap is fixed to the body by fitting the second fitting member with the first fitting member.

In one embodiment, the reagent bottle further comprises a connecting member, and the connecting member is at least partially of a flexible and bendable structure; and the bottle cap is in hinged connection with the body by means of the connecting member.

In one embodiment, an outer wall of the body on a side close to the connecting member is provided with an engagement groove, and the engagement groove is the first fitting member; the bottle cap is provided with an engagement block, and the engagement block is the second fitting member; and the body is connected to the outer wall of the body by engaging the engagement block with the engagement groove.

In one embodiment, the body comprises a bottle body and a connecting body, wherein the bottle body has the accommodating cavity, and the connecting body is detachably sleeved at a bottle mouth end of the bottle body; and one end of the connecting body away from the bottle mouth end is provided with the first opening in communication with the accommodating cavity, and the first fitting member is arranged at a side wall of the connecting body.

In one embodiment, the body further comprises a sealing member; and the sealing member is detachably inserted into the bottle mouth end of the bottle body, and the sealing member is arranged in the connecting body.

In one embodiment, one end of the connecting body close to the bottle body is provided with a first notch, a rotation stopping boss is arranged at the bottle mouth end of the bottle body, and the connecting body moves until the first notch abuts against the rotation stopping boss, to form a relatively fixed state with the bottle body.

In one embodiment, an outer wall of the connecting body on a side opposite to the first notch is provided with an anti-loosening rib, and an outer wall of the bottle body on a side opposite to the rotation stopping boss is provided with an anti-loosening boss; and
when the first notch abuts against the rotation stopping boss, the anti-loosening rib abuts against the anti-loosening boss, and the first notch and the anti-loosening rib are both located between the rotation stopping boss and the anti-loosening boss.

In one embodiment, the reagent storage device comprises a reagent bottle; the reagent bottle comprises a body, a bottle cap, a first fitting member, and a second fitting member;
the body has an accommodating cavity and a first opening in communication with the accommodating cavity;
the bottle cap comprises a first cap member and a second cap member movably covering the first cap member, the first cap member covers the first opening of the body, the first fitting member is arranged on the first cap member, and the second fitting member is arranged on the second cap member; and when the second cap member moves to be opened relative to the first cap member, the first cap member is fixed to the second cap member by fitting the first fitting member with the second fitting member.

In one embodiment, the automatic staining system further comprises a liquid tank arranged on the mounting frame, wherein a weighing device is arranged between the liquid tank and the mounting frame.

In one embodiment, the weighing device comprises a fixed portion, a movable portion, and a weighing sensor; the movable portion is movably arranged on the fixed portion, and the liquid tank is arranged on the movable portion; and
the mounting frame is provided with a third channel, the fixed portion is arranged in the third channel by means of the weighing sensor, and the movable portion is movably pulled in the third channel in an extension direction of the fixed portion.

In one embodiment, the weighing device comprises a third sliding pair; the third sliding pair comprises a third slide rail and a third sliding member; and
the third slide rail is arranged on the mounting frame in an extension direction of the third channel, the third slide rail is the fixed portion, the third sliding member is slidably arranged in the third slide rail, and the third sliding member is the movable portion.

In one embodiment, four weighing sensors are provided, which are uniformly arranged around the fixed portion.

In one embodiment, the automatic staining system further comprises a second self-locking device and a supporting member, wherein the liquid tank is arranged on the movable portion by means of the supporting member; and
the second self-locking device comprises a locking groove body and a locking member; the locking groove body or the locking member is arranged at an inner end and/or an outer end of the fixed portion, the locking member or the locking groove body is arranged at an inner end and/or an outer end of the supporting member, and when the supporting member is pushed and pulled until the locking member corresponds to the locking groove body, the locking member is locked to the locking groove body.

In one embodiment, the staining device comprises a staining module arranged on the mounting frame; the staining module comprises a cover, and the cover comprises a first cover body; and
the first cover body is provided with an insertion groove, a third elastic member is arranged in the insertion groove, and an elastic travel space for the third elastic member is provided in the insertion groove.

In one embodiment, the cover further comprises a second cover body, the second cover body is inserted into the insertion groove, two ends of the third elastic member respectively elastically abut against the second cover body and a groove wall of the insertion groove, and the height of the insertion groove is greater than the thickness of the second cover body.

In one embodiment, the staining module further comprises a seat; the first cover body is movably connected to the seat; and when the first cover body moves to cover the seat, a staining cavity is formed between the second cover body and the seat, and the second cover body is provided with a sample introduction hole in communication with the staining cavity.

In one embodiment, a first end of the first cover body is connected to the seat, and the first cover body rotates around a joint between the first cover body itself and the seat; and
the sample introduction hole of the second cover body is provided in the second cover body close to the joint between the first cover body and the seat.

In one embodiment, the third elastic member comprises an elastic body and an engagement body connected to a first end of the elastic body, and a second end of the elastic body is connected to a top wall of the insertion groove; the second cover body is provided with an engagement groove; and when the second cover body is inserted into the insertion groove, the engagement body is engaged in the engagement groove.

In one embodiment, the engagement body is arc-shaped, and the insertion groove is an arc-shaped groove adapted to the shape of the engagement body.

In one embodiment, the staining module further comprises a driving device and a transmission device that are connected to the seat, an output end of the driving device is connected to an input end of the transmission device, and an output end of the transmission device is connected to the first cover body; and the driving device drives the transmission device to drive the first cover body to rotate around the joint between the first cover body itself and the seat.

In one embodiment, the transmission device comprises a rotating shaft, and a worm wheel and a worm arranged to mesh with each other, and the worm wheel is connected to the first cover body via the rotating shaft; and
the output end of the driving device is connected to the worm and drives the worm to rotate, such that the worm drives the worm wheel meshing with the worm itself to rotate, and when rotating, the worm wheel drives the first cover body to rotate by means of the rotating shaft.

In one embodiment, the staining module further comprises a fourth elastic member, wherein two ends of the fourth elastic member respectively abut against the first cover body and the seat, and the fourth elastic member is located between the rotating shaft and the staining cavity.

A tissue section staining method applied to an automatic staining system described above comprises the following steps:
loading a slide, which carries a pathological section, onto a staining device;
controlling at least one staining device to independently move into a pushed-in state or a pushed-out state relative to the remaining staining devices along a first channel of a mounting frame;
performing a tissue section staining operation when the staining device moves into the pushed-in state relative to the first channel; and
stopping the tissue section staining operation when the staining device moves into the pushed-out state relative to the first channel.

The technical solutions provided by the present invention have the following advantages and effects.

The automatic staining system is provided with the mounting frame and the at least one staining device, the mounting frame is provided with the at least one first channel, and each staining device is independently and movably inserted into one first channel, such that each staining device independently forms a staining unit, and according to staining requirements, any staining device can be independently pulled out of one of the first channels for an operation of loading, unloading or cleaning. In this case, the other staining devices which are not pulled out relative to the first channels are not affected, and can still be inserted into the first channels for staining operations, so that instrument resources can be fully used, the working efficiency can be improved, the use flexibility of the automatic staining system can be improved, and an influence on the result of staining can be effectively avoided, thereby preventing a section from scrapping.

### Brief Description of the Drawings

The accompanying drawings herein show specific examples of the technical solutions of the present invention, form a part of the description with specific implementations, and are intended to explain the technical solutions, principle and effect of the present invention.

Unless otherwise specified or defined, the same reference signs in different accompanying drawings represent the same or similar technical features, and different reference signs may be used to represent the same or similar technical features.
FIG. 1 is a schematic structural perspective view of an automatic staining system according to an embodiment of the present invention;
FIG. 2 is a schematic structural perspective view of the automatic staining system of FIG. 1 in an open state;
FIG. 3 is a schematic structural diagram of one of staining devices in a pulled-out state in the automatic staining system of FIG. 1;
FIG. 4 is a schematic structural diagram of the automatic staining system of FIG. 1, in which a liquid tank is in a pulled-out state and a reagent storage device is in a pushed-in state;
FIG. 5 is a schematic structural diagram of a longitudinal section of one of the staining devices in a pushed-in state in the automatic staining system of FIG. 1;
FIG. 6 is a schematic structural exploded view of the staining device of FIG. 5;
FIG. 7 is a schematic structural diagram of a first self-locking device of FIG. 6;
FIG. 8 is a partial schematic structural diagram of the staining device in a pulled-out state in the automatic staining system of FIG. 1;
FIG. 9 is a schematic structural exploded view of a push-pull device of FIG. 8;
FIG. 10 is a schematic state diagram of a push-pull device when a staining device is in a pushed-in state;
FIG. 11 is a schematic state diagram of a push-pull device when a staining device is in a pulled-out state;
FIG. 12 is a schematic structural diagram of the push-pull device of FIG. 10 from another angle;
FIG. 13 is a schematic structural diagram of a linkage assembly of the push-pull device of FIG. 10;
FIG. 14 is a schematic structural exploded view of a movable body of FIG. 10;
FIG. 15 is a schematic structural diagram of a longitudinal section of a reagent storage structure of FIG. 4 relative to a mounting frame;
FIG. 16 is a schematic structural exploded view of the reagent storage structure of FIG. 15;
FIG. 17 is a schematic diagram of a longitudinal section of an arrangement structure of a reading module of FIG. 16;
FIG. 18 is a partial schematic structural diagram of the reagent storage structure of FIG. 16;
FIG. 19 is a schematic structural diagram showing fitting between reagent bottles and a rack of FIG. 15;
FIG. 20 is a schematic structural diagram of a locking device of FIG. 18;
FIG. 21 is a schematic structural diagram showing cooperative movement between the liquid tank and a mounting frame of FIG. 4;
FIG. 22 is a schematic structural exploded view of the liquid tank and the mounting frame of FIG. 21;
FIG. 23 is a schematic structural diagram of a liquid tank body of FIG. 21;
FIG. 24 is a schematic structural diagram of a second self-locking device of FIG. 22;
FIG. 25 is a schematic structural diagram of a bottle cap of a reagent bottle in a closed state;
FIG. 26 is a schematic structural diagram of the bottle cap of the reagent bottle of FIG. 25 that is in an open state and is tightly engaged on a body;
FIG. 27 is a schematic structural exploded view of the reagent bottle of FIG. 25;
FIG. 28 is a schematic structural sectional view of the reagent bottle of FIG. 25;
FIG. 29 is a schematic diagram of an enlarged structure of part A of the reagent bottle of FIG. 28;
FIG. 30 is a schematic structural diagram of the reagent bottle of FIG. 28 from an angle;
FIG. 31 is a schematic structural diagram of the reagent bottle of FIG. 28 from another angle;
FIG. 32 is a schematic top view of a structure of FIG. 26;
FIG. 33 is a schematic structural sectional view of a fitting structure between the reagent bottles and the rack of FIG. 19;
FIG. 34 is a schematic structural diagram of a covering member of a staining module of FIG. 3 in a closed state;
FIG. 35 is a schematic structural diagram of the covering member of the staining module of FIG. 34 in an open state;
FIG. 36 is a schematic structural sectional view of the staining module of FIG. 34;
FIG. 37 is a schematic structural exploded view of the staining module of FIG. 34;
FIG. 38 is a schematic structural exploded view of a first cover body of the staining module of FIG. 34;
FIG. 39 is a schematic exploded view of a partial structure of the staining module of FIG. 34;
FIG. 40 is a schematic exploded view of a seat and a driving device of the staining module of FIG. 34;
FIG. 41 is a schematic structural diagram of a second cover body of the staining module of FIG. 34; and
FIG. 42 is a schematic structural exploded view of the second cover body of FIG. 41.

Description of reference signs:
100. Automatic staining system;
1. Mounting frame; 11. First channel; 12. Second channel; 13. Second magnetic member; 14. First magnetic member; 15. First sliding pair; 151. First slide rail; 152. First sliding member; 1521. Slider; 1522. Connecting block; 16. First self-locking device; 161. First electromagnetic assembly; 1611. First electromagnetic member; 1612. First acting member; 1613. First locking shaft; 162. First locking groove; 163. Locking frame; 1631. First limiting cavity; 1632. Second limiting cavity; 1633. Handle portion; 17. Damping device; 171. First gear; 172. Second gear; 18. Third channel; 19. Buffer member;
2. Staining device; 21. Push-pull device; 211. Push-pull body; 212. Panel; 2121. First push body; 2122. Second push body; 213. Swinging device; 214. Linkage assembly; 2141. First moving portion; 2142. Second moving portion; 2143. First rod body; 2144. Second rod body; 215. First guide member; 2151. First bevel portion; 216. Second guide member; 2161. Second bevel portion; 217. Torsion structure; 2171. Rotating shaft; 2172. Torsion spring; 218. Carrying member;
3. Reagent storage device; 31. Rack; 32. Reading module; 33. Transmitting module; 34. Second sliding pair; 341. Second slide rail; 342. Second sliding member; 35. Locking device; 351. Second electromagnetic assembly; 3511. Second electromagnetic member; 3512. Second acting member; 3513. Second locking shaft; 3514. Fixing frame; 3515. Third limiting cavity; 3516. Limiting portion; 3517. Fourth limiting cavity; 352. Second locking groove; 36. Unlocking assembly; 361. Unlocking shaft; 362. Third acting member; 363. Connecting rod; 364. Stopper; 37. Optocoupler switch; 371. Generator; 372. Receiver; 373. Blocking member; 38. Mounting cap;
4. Reagent bottle; 41. Body; 411. Bottle body; 4111. Rotation stopping boss; 4112. Anti-loosening boss; 412. Connecting body; 4121. First notch; 4122. Anti-loosening rib; 413. Accommodating cavity; 414. First opening; 415. Positioning bump; 42. Bottle cap; 421. Projection; 43. First fitting member; 431. Engagement plate; 432. Engagement protrusion; 44. Second fitting member; 45. Connecting member; 46. Sealing member; 461. Groove; 462. Second opening;
5. Liquid tank; 51. Weighing sensor; 52. Third sliding pair; 521. Fixed portion; 522. Movable portion; 53. Supporting member; 531. Bottom disc; 532. Side enclosing plate; 54. Liquid tank body; 541. Sample adding port; 55. Adapter; 551. First joint; 552. Second joint; 56. Second self-locking device; 561. Locking groove body; 5611. Locking seat; 5612. Elastic clamping member; 562. Locking member;
6. Staining module; 61. Seat; 611. Base; 612. Heating body; 613. Heat conduction plate; 62. Cover; 621. First cover body; 6211. Insertion groove; 622. Second cover body; 6221. Sample introduction hole; 6222. Engagement groove; 6223. Annular sealing body; 6224. Protrusion; 6225. Second notch; 63. Third elastic member; 631. Elastic body; 632. Engagement body; 64. Driving device; 65.
Transmission device; 651. Worm; 652. Worm wheel; 653. Rotating shaft; 66. Fourth elastic member; 67. Retaining assembly; 671. First retaining member; 672. Second retaining member; 68. Calibration assembly; 681. Photoelectric switch; 682. Baffle; 200. Slide.

### Detailed Description of Embodiments

For ease of understanding the present invention, specific embodiments of the present invention will be described in more detail with reference to accompanying drawings of the description.

Unless specifically stated or otherwise defined, all technical and scientific terms used herein have the same meanings as those commonly understood by those skilled in the art to which the present invention belongs. In the case of combining the technical solutions of the present invention with a real scene, all the technical and scientific terms used herein may also have the meanings corresponding to the purpose of achieving the technical solutions of the present invention.

Unless specifically stated or otherwise defined, the terms "first, second, ..." used herein are merely intended to distinguish names and do not represent the specific number or order.

Unless specifically stated or otherwise defined, the term "and/or" used herein includes any and all combinations of one or more related listed items.

It should be noted that when an element is said to be "fixed to" another element, it may be directly fixed to the other element or an intervening element may be present. When an element is said to be "connected" to another element, it may be directly connected to the other element or an intervening element may be also present. When an element is said to be "mounted on" another element, it may be directly mounted on the other element or an intervening element may be also present. When an element is said to be "arranged at" another element, it may be directly arranged at the other element or an intervening element may be also present.

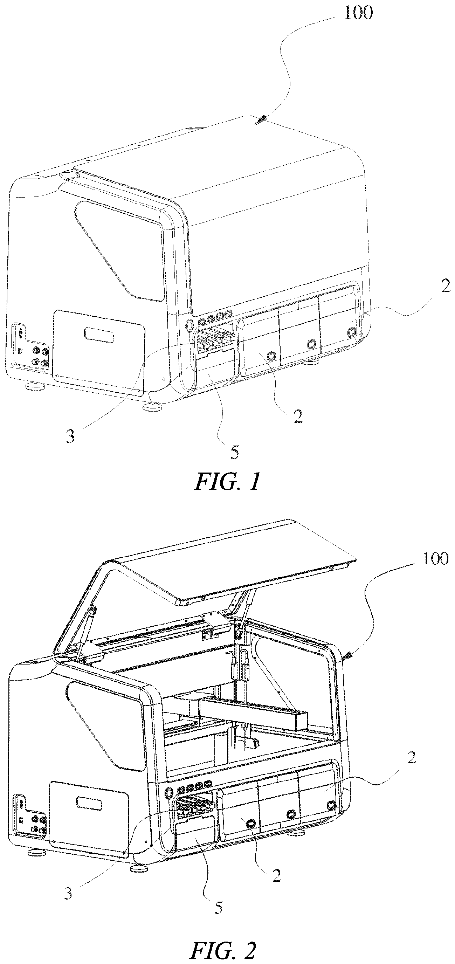

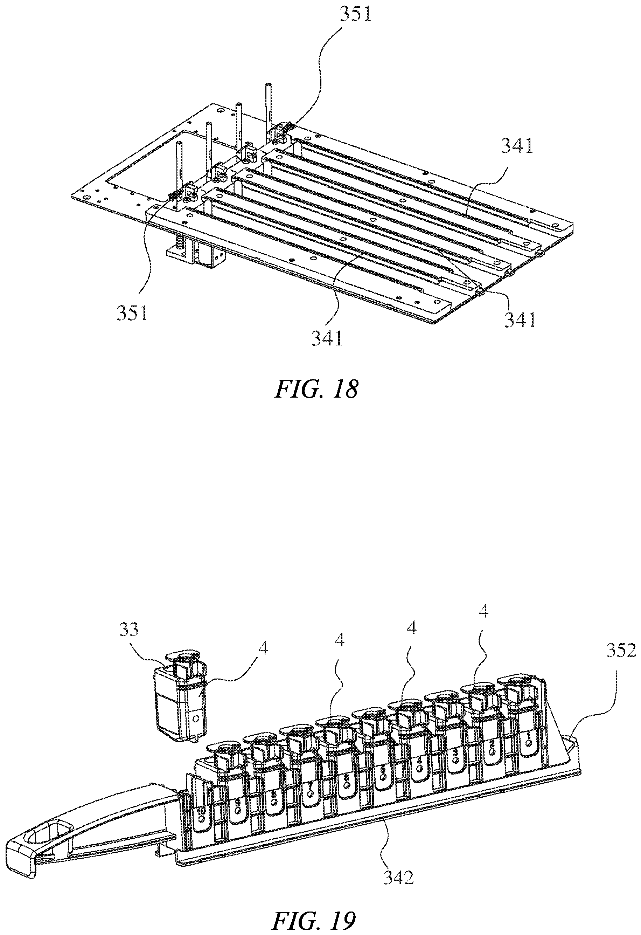

It should be noted that, as shown in FIGS. 1 to 42, an automatic staining system 100 has a staining device 2, a reagent storage device 3, a liquid tank 5, a pipetting device, etc. integrated in a mounting frame 1. The reagent storage device 3 is configured to store a staining-related reagent, and a buffer solution is stored in the liquid tank 5. The pipetting device pipettes the buffer solution and the reagent from the liquid tank 5 and the reagent storage device 3 onto the staining device 2 for automatic staining, so that an automatic operation can be performed, and an overall staining operation can be controlled by a control circuit, thereby effectively improving the automation performance.

In some embodiments, the mounting frame 1 may be of an open structure, or in other embodiments, a guard that can be rotatably opened may be arranged on the mounting frame 1. As shown in FIGS. 1 and 2, a covering structure is formed when the guard covers the mounting frame 1, so as to prevent a staining process performed in the mounting frame 1 from being affected by an external environment, and the staining device 2, the reagent storage device 3 or the liquid tank 5 may be pulled out for loading, unloading or cleaning.

The present invention provides an automatic staining system 100. As shown in FIGS. 1 to 3, the automatic staining system 100 comprises a mounting frame 1 and at least one staining device 2.

The mounting frame 1 is provided with at least one first channel 11. The staining devices 2 are arranged in a one-to-one correspondence with the first channels 11, and each staining device 2 is independently and movably inserted into one first channel 11. It may be understood that, with regard to each staining device 2, a corresponding staining device 2 can be independently pulled out of one of the first channels 11 for an operation of loading, unloading or cleaning. In this case, another staining device 2 is not affected, and the another staining device 2 is still inserted into the first channel 11 for a staining operation. It should be noted that the staining device 2 is configured to load a slide 200 to be stained and perform a staining operation on the slide 200. Each staining device 2 may be loaded with one or more slides 200, which is not specially limited herein.

To sum up, the automatic staining system 100 is provided with the mounting frame 1 and the at least one staining device 2, the mounting frame 1 is provided with the at least one first channel 11, and each staining device 2 is independently and movably inserted into one first channel 11, such that each staining device 2 independently forms a staining unit, and according to staining requirements, any staining device 2 can be independently pulled out of one of the first channels 11 for an operation of loading, unloading or cleaning. In this case, the other staining devices 2 which are not pulled out relative to the first channels 11 are not affected, and can still be inserted into the first channels 11 for staining operations, so that instrument resources can be fully used, working efficiency can be improved, the use flexibility of the automatic staining system 100 can be improved, and an influence on the result of staining can be effectively avoided, thereby preventing a section from scrapping.

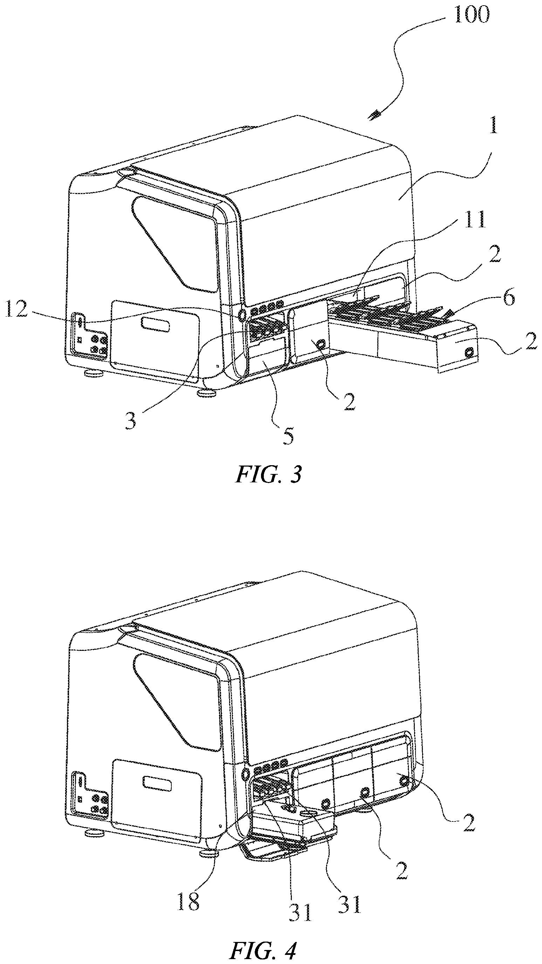

In some embodiments, as shown in FIG. 3, the automatic staining system 100 further comprises at least one reagent storage device 3. It should be noted that in this embodiment, the reagent storage device 3 is configured to store various reagent bottles, etc., which is not specially limited herein. Each reagent storage device 3 may be configured to contain one reagent bottle 4 or a plurality of reagent bottles 4, and each reagent bottle 4 may contain one reagent or a plurality of reagents. The mounting frame 1 is further provided with at least one second channel 12. The reagent storage devices 3 are arranged in a one-to-one correspondence with the second channels 12, and each reagent storage device 3 is independently and movably inserted into one second channel 12. It may be understood that, each reagent storage device 3 is independently and movably inserted into one second channel 12, so that according to staining requirements, any reagent storage device 3 that needs liquid adding can be independently pulled out of one of the second channels 12 for a liquid adding operation. In this case, the other reagent storage devices 3 which are not pulled out relative to the second channels 12 are not affected, and can still be inserted into the second channels 12, so as to provide reagents to the slides 200 on the staining devices 2 for sample adding operations. Therefore, by the cooperation of the reagent storage devices 3, the liquid adding and sample adding operations can be performed at the same time, the instrument resources can be fully utilized, and the working efficiency can be improved.

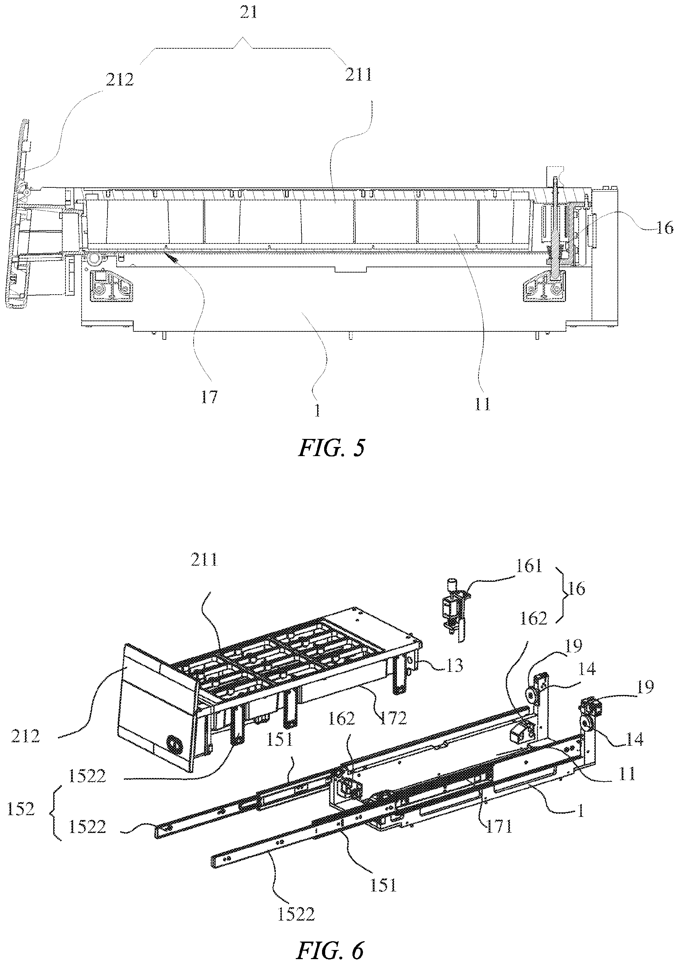

In some embodiments, as shown in FIGS. 5 to 8, the automatic staining system 100 further comprises a first sliding pair 15. The first sliding pair 15 comprises a first slide rail 151 and a first sliding member 152.

The first slide rail 151 is arranged in the first channel 11, the staining device 2 is arranged on the first sliding member 152, and the first sliding member 152 is slidably arranged in the first slide rail 151. It may be understood that by sliding fit between the first slide rail 151 and the first sliding member 152, the staining device 2 can smoothly slide back and forth in the first channel 11 along a direction of the first slide rail 151 for pulling, such that the staining device 2 forms an open state or a closed state relative to the first channel 11. It should be noted that the staining device 2 may also be driven by other moving pairs to move back and forth in the first channel 11 for pulling, which is not specially limited herein.

In some embodiments, two first slide rails 151 are provided, the two first slide rails 151 are arranged in the first channel 11 side-by-side, two first sliding members 152 are provided, and the first sliding members 152 are arranged in a one-to-one correspondence with the first slide rails 151. It may be understood that with the cooperation of the two first slide rails 151 and the two first sliding members 152, the staining device 2 can smoothly slide in the first channel 11, thereby improving the structural stability.

In some embodiments, as shown in FIG. 6, the mounting frame 1 is provided with a first magnetic member 14 at an inner end of the first channel 11, and the staining device 2 is provided with a second magnetic member 13 magnetically cooperating with the first magnetic member 14. Specifically, the second magnetic member 13 is arranged at an inner end of the staining device 2. It should be noted that the inner end of the staining device 2 refers to an inner end of the staining device 2 located in the first channel 11, an outer end of the staining device 2 is arranged outside the first channel 11, and an external force is applied to the outer end of the staining device 2 to cause the staining device 2 to slide along the first slide rail 151 in the first channel 11. The inner end of the first channel 11 refers to the end of the first channel 11 located inside the mounting frame 1. The staining device 2 is magnetically positioned with the first magnetic member 14 by means of the second magnetic member 13 after being pushed into the first channel 11.

It may be understood that by means of the cooperation between the second magnetic member 13 and the first magnetic member 14, after the staining device 2 is pushed into the first channel 11 and after the inner end of the staining device 2 abuts against the inner end of the first channel 11, the second magnetic member 13 and the first magnetic member 14 can magnetically attract each other, and an attractive force formed by mutual attraction forms a pulling force between the inner end of the first channel 11 and the staining device 2, such that the staining device 2 can be accurately and firmly fixed in the first channel 11, and has the characteristics of convenient and quick connection, convenient disassembly, and accurate positioning. Specifically, in this embodiment, two second magnetic members 13 are provided, the two second magnetic members 13 are located on two opposite sides of the inner end of the staining device 2, the mounting frame 1 is correspondingly provided with two first magnetic members 14 at the inner end of the first channel 11, and the second magnetic members 13 are arranged in a one-to-one correspondence with the first magnetic members 14.

In some embodiments, the mounting frame 1 is further provided with a buffer member 19 that is at the same level as the staining device 2 at the inner end of the first channel 11, the staining device 2 abuts against the buffer member 19 after being pushed into the first channel 11, and the buffer member 19 is configured to limit and buffer the staining device 2, such that the staining device 2 is buffered by the buffer member 19 after being pushed into the first channel 11 under an external force, thereby preventing the staining device 2 from relatively colliding with respect to the inner end of the first channel 11 to affect the staining effect.

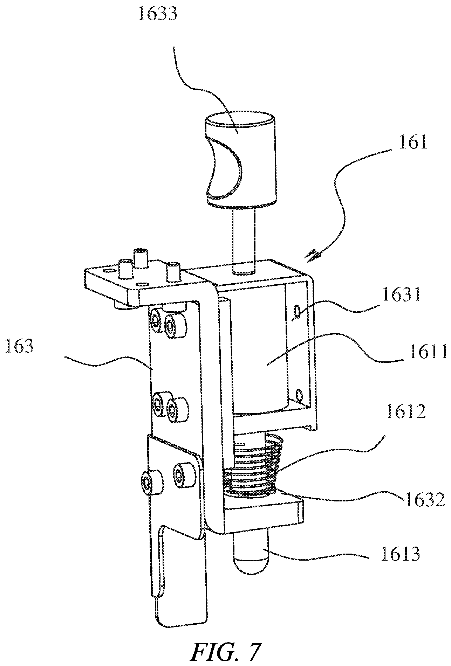

In some embodiments, as shown in FIGS. 6 and 7, the automatic staining system 100 further comprises a first self-locking device 16. When the staining device 2 is pushed into the first channel 11 and/or pushed out of the first channel 11, the staining device 2 and the mounting frame 1 form a locked state by means of the first self-locking device 16, such that the staining device 2 can be locked relative to the position of the mounting frame 1, thereby preventing the staining device 2 from continuing to move to affect the staining effect or operations of loading, unloading, etc.

In some embodiments, the first self-locking device 16 comprises a first electromagnetic assembly 161 and a first locking groove 162. The first electromagnetic assembly 161 or the first locking groove 162 is arranged at the inner end and/or the outer end of the staining device 2, the mounting frame 1 is provided with the first locking groove 162 or the first electromagnetic assembly 161 at the inner end and/or the outer end of the first channel 11, and when the staining device 2 is pushed or pulled to cause the first electromagnetic assembly 161 to correspond to the first locking groove 162, the first electromagnetic assembly 161 is locked relative to the first locking groove 162. The first electromagnetic assembly 161 acts on the first locking groove 162 for locking or unlocking, so that the staining device 2 can be locked to the mounting frame 1 in an open state relative to the first channel 11, thereby facilitating an operation of loading, unloading, or cleaning of the staining device 2, or the staining device 2 can be locked to the mounting frame 1 in a pushed-in state relative to the first channel 11, thereby facilitating a staining operation of the staining device 2.

In some embodiments, the first electromagnetic assembly 161 comprises a first electromagnetic member 1611, a first acting member 1612, and a first locking shaft 1613, and the first electromagnetic member 1611 and the first acting member 1612 are both connected to the first locking shaft 1613. The first locking shaft 1613 is vertically and movably arranged on the staining device 2, for example, at the inner end of the staining device 2, and the first locking groove 162 is provided in the mounting frame 1, for example, at the inner end and the outer end of the mounting frame 1. The first acting member 1612 and the first electromagnetic member 1611 form opposing acting forces on the first locking shaft 1613 to drive the first locking shaft 1613 to be inserted into the first locking groove 162 or separated from the first locking groove 162. It may be understood that in this embodiment, when the staining device 2 is in an open state relative to the first channel 11 and the first locking shaft 1613 is opposite to the first locking groove 162 provided at the outer end of the first channel 11, the first electromagnetic member 1611 is in a de-energized state, and the first acting member 1612 drives the first locking shaft 1613 to move closer to the first locking groove 162, such that the first locking shaft 1613 is inserted and locked to the first locking groove 162. In this case, the staining device 2 is locked to the mounting frame 1, thereby facilitating an operation of loading, unloading or cleaning of the staining device 2. When the operation of loading, unloading or cleaning is completed, the first electromagnetic member 1611 is energized. In this case, the first locking shaft 1613 moves away from the first locking groove 162 under the action of the first electromagnetic member 1611, and the first locking shaft 1613 is unlocked with respect to the first locking groove 162, so that the staining device 2 can slide relative to the mounting frame 1 and be pushed into the first channel 11. In this case, the first locking shaft 1613 is opposite to the first locking groove 162 provided in the mounting frame 1 and located at the inner end of the first channel 11, and the first electromagnetic member 1611 is de-energized again. The first acting member 1612 drives the first locking shaft 1613 to move closer to the first locking groove 162, such that the first locking shaft 1613 is inserted and locked to the first locking groove 162. In this case, the staining device 2 is locked to the mounting frame 1, thereby facilitating the staining operation of the staining device 2. When the staining is completed, the first electromagnetic member 1611 is energized, so that unlocking can be performed under the action of the first electromagnetic member 1611 to pull the staining device 2 out for cyclic staining. Therefore, the first acting member 1612 and the first electromagnetic member 1611 cooperate with each other to act on the first locking shaft 1613, so that the staining device 2 can be quickly locked to or unlocked from the mounting frame 1.

In some embodiments, the first self-locking device 16 further comprises a locking frame 163 arranged on the staining device 2; and the first acting member 1612 is a spring or another component having elastic properties. The locking frame 163 has a first limiting cavity 1631 and a second limiting cavity 1632 that are coaxially provided. The first electromagnetic member 1611 is accommodated in the first limiting cavity 1631, and the first acting member 1612 is accommodated in the second limiting cavity 1632. The first locking shaft 1613 is sequentially inserted into the first electromagnetic member 1611 and the first acting member 1612. The first locking shaft 1613 is provided with a limiting ring at a position of the second limiting cavity 1632. Two ends of the first acting member 1612 respectively abut between a cavity wall of the second limiting cavity 1632 away from the first limiting cavity 1631 and the limiting ring of the first locking shaft 1613, such that the first locking shaft 1613 compresses, under the action of the first electromagnetic member 1611, the first acting member 1612 to move away from the first locking groove 162 for an unlocking operation. After being de-energized, the first electromagnetic member 1611 moves closer to the first locking groove 162 under the action of the first acting member 1612 for a locking operation.

In some embodiments, a handle portion 1633 is arranged at a top end of the first locking shaft 1613. When the first electromagnetic member 1611 is in an abnormal state or a de-energized state and needs to be manually unlocked, a user can lift the handle portion 1633 by hand to move the first locking shaft 1613 away from the first locking groove 162 for an unlocking operation, thereby achieving a simple and convenient operation.

In some embodiments, the mounting frame 1 is provided with the downwardly recessed first locking groove 162 at the inner end and the outer end of the first channel 11, and a groove opening of the first locking groove 162 is provided in the form of an inclined plane. One end of the first locking shaft 1613 inserted into the first locking groove 162 is of a convex arc-shaped structure or an inclined plane structure, such that the first locking shaft 1613 can smoothly slide into the first locking groove 162 or out of the first locking groove 162.

In some embodiments, the automatic staining system 100 further comprises a damping device 17. The damping device 17 comprises a first gear 171 and a second gear 172, the first gear 171 is arranged at the mounting frame 1 and is located in the first channel 11, the second gear 172 is arranged on the staining device 2, and the staining device 2 rotates with the mounting frame 1 by meshing the first gear 171 with the second gear 172. It may be understood that with the meshing and rotation of the first gear 171 and the second gear 172, a damping force can be formed between the staining device 2 and the mounting frame 1 during relative sliding, thereby improving the push-pull handfeel. It should be noted that to enable the staining device 2 and the mounting frame 1 to slide relatively and have the damping force, specifically in this embodiment, the first gear 171 is arranged at the mounting frame 1 and is located at a bottom wall of the first channel 11, and the second gear 172 is arranged at a bottom of the staining device 2. Two first slide rails 151 are arranged at a side wall of the mounting frame 1 corresponding to the first channel 11. The first sliding member 152 comprises a slider 1521 and a connecting block 1522 connected to the slider 1521. The slider 1521 is slidably arranged on the first slide rail 151, and the other end of the connecting block 1522 opposite to the slider 1521 is arranged at a side wall of the staining device 2, so that the staining device 2 can form damping push-pull while smoothly sliding relative to the mounting frame 1, thereby improving the push-pull handfeel.

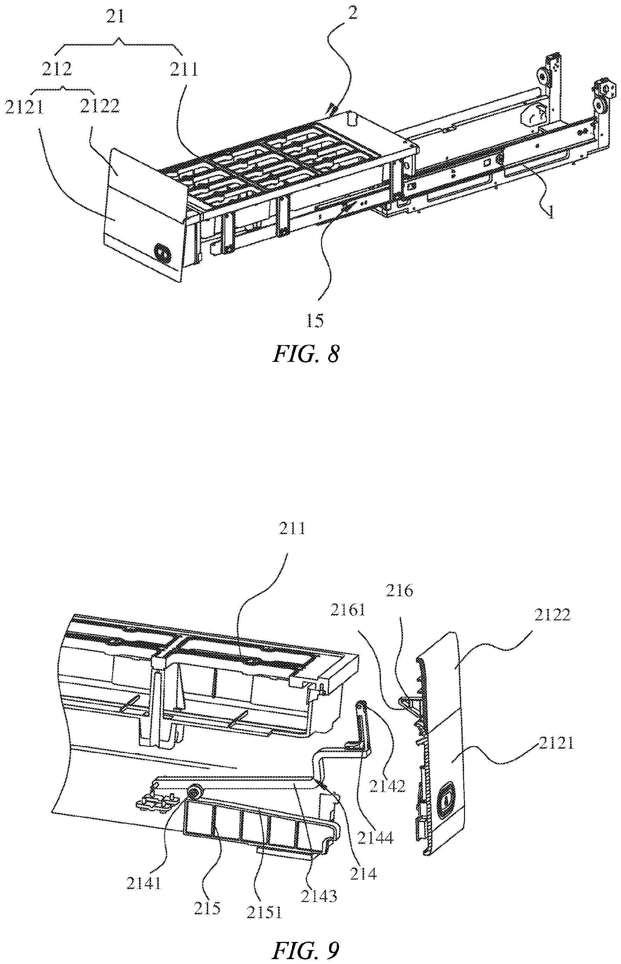

In some embodiments, as shown in FIGS. 8 to 14, the staining device 2 comprises a push-pull device 21. The push-pull device 21 comprises a push-pull body 211 and a panel 212. The panel 212 is arranged at an outer end of the push-pull body 211, the panel 212 is arranged outside the first channel 11, and at least a partial structure of the panel 212 can move to a first position or a second position relative to the push-pull body 211. Specifically, a partial structure or an integral structure of the panel 212 can move relative to the push-pull body 211 to change its own state and move to the first position or the second position. For example, the panel 212 may be partially flipped to the first position or the second position relative to the push-pull body 211, or the panel 212 may slide as a whole to the first position or the second position relative to the push-pull body 211, which is not specially limited herein, such that the position of the panel 212 can be changed according to the position of the push-pull body 211 in the second channel 12, to facilitate an loading or unloading operation or a staining operation of the staining device 2, and avoid affecting the overall aesthetics of an instrument.

In some embodiments, as shown in FIGS. 8, 10 and 11, the panel 212 comprises a first push body 2121 arranged in a height direction of the push-pull body 211 and a second push body 2122 rotatably connected to the first push body 2121; and when the push-pull body 211 is in a pulled-out state or a pushed-in state, the second push body 2122 rotates to the first position or the second position. It may be understood that the second push body 2122 can be flipped relative to the first push body 2121, for example, the second push body may be flipped to one side close to the push-pull body 211 or to the other side away from the push-pull body 211. Therefore, based on the push-pull state of the push-pull body 211, the second push body 2122 can be flipped relative to the first push body 2121 to the first position or the second position, to prevent the panel 212 from obstructing the loading or unloading operation or the staining operation of the staining device 2, and to avoid affecting the overall aesthetics of the instrument. Specifically, the first push body 2121 and the second push body 2122 both may be of a plate-like structure or in other shapes, which is not specially limited herein.

In some embodiments, as shown in FIGS. 9 to 13, the push-pull device 21 further comprises a swinging device 213 connected to the second push body 2122, the swinging device 213 drives the second push body 2122 to flip between the push-pull body 211 and the first push body 2121 relative to the first push body 2121, a limit position of the second push body 2122 when flipped to approach the push-pull body 211 is the first position, and a limit position of the second push body 2122 when flipped to approach the first push body 2121 is the second position. It may be understood that when the push-pull body 211 is in a pulled-out state, the swinging device 213 drives the second push body 2122 to flip to the limit position close to the push-pull body 211. In this case, the second push body 2122 can avoid obstructing an operation of loading, unloading or cleaning of the staining device 2. After the operation of loading, unloading or cleaning is completed, the panel 212 is pushed to cause the push-pull body 211 to be in a pushed-in state relative to the first channel 11. In this case, the swinging device 213 drives the second push body 2122 to flip to a position close to the first push body 2121. The first push body 2121 and the second push body 2122 cooperate with each other to form a covering structure to cover a position of an outlet of the first channel 11, such that the panel 212 covers an opening portion of the first channel 11 to form a closed cavity for staining and other operations.

In some embodiments, the swinging device 213 comprises a linkage assembly 214, a first guide member 215, and a second guide member 216; and the first guide member 215 is arranged in the first channel 11, and the second guide member 216 is arranged on the second push body 2122. The linkage assembly 214 is connected to the push-pull body 211, and a first end and a second end of the linkage assembly 214 are respectively in contact with the first guide member 215 and the second guide member 216. When the push-pull body 211 moves along the first channel 11, the first end of the linkage assembly 214 moves along the first guide member 215 to drive the second end of the linkage assembly 214 to move. The second end of the linkage assembly 214 is driven to move along the second guide member 216 to drive the second push body 2122 to flip. It may be understood that during the movement of the push-pull body 211 along the first channel 11, the linkage assembly 214 can form a moving state under the guidance of the first guide member 215 on the linkage assembly 214, and the linkage assembly 214 acts on the second push body 2122 along a direction of the second guide member 216 under the guidance of the second guide member 216, such that the second push body 2122 can form a state of linkage with the push-pull body 211 under the cooperation of the first guide member 215, the second guide member 216 and the linkage assembly 214, and a flipping state of the second push body 2122 is changed by changing the movement state of the push-pull body 211, thereby achieving a simple and convenient operation.

In some embodiments, the first guide member 215 has a first bevel portion 2151, and the height of a first end of the first bevel portion 2151 close to the panel 212 is less than the height of a second end of the first bevel portion away from the panel 212; the first end of the linkage assembly 214 has a first moving portion 2141, and the second end thereof has a second moving portion 2142; the second guide member 216 has a second bevel portion 2161 obliquely arranged in an extension direction from the first push body 2121 to the second push body 2122, and the height of a first end of the second bevel portion 2161 close to the first push body 2121 is less than the height of a second end of the second bevel portion away from the first push body 2121; and when the push-pull body 211 moves along the first channel 11, the first moving portion 2141 moves along the first bevel portion 2151 to drive the linkage assembly 214 to move up and down, and the second end of the linkage assembly 214 moves along the second bevel portion 2161 by means of the second moving portion 2142 to drive the second push body 2122 to swing. It may be understood that when the push-pull body 211 moves along the first channel 11 and is pulled out to a preset position, the first moving portion 2141 is located at the first end of the first bevel portion 2151, and then the push-pull body 211 continues to be pulled out to drive the first moving portion 2141 to move from the higher first end to the lower second end along the first bevel portion 2151, so as to drive the linkage assembly 214 to move downward. In this case, the linkage assembly 214 is driven to drive the second moving portion 2142 to move along the second bevel portion 2161 from the second end to the first end, and drive the second push body 2122 to flip towards the push-pull body 211. When the push-pull body 211 is pulled out in place, the second push body 2122 is flipped towards the push-pull body 211 to the limit position. When the push-pull body 211 moves along the first channel 11 and is pushed into a preset position, the first moving portion 2141 is located at the second end of the first bevel portion 2151, and then the push-pull body 211 continues to be pushed in to drive the first moving portion 2141 to move along the first bevel portion 2151 from the lower second end to the higher first end, so as to drive the linkage assembly 214 to move upward. In this case, the linkage assembly 214 is driven to drive the second moving portion 2142 to move along the lower first end of the second bevel portion 2161 to the higher second end, and drive the second push body 2122 to flip towards the first push body 2121. Therefore, with the cooperation of the linkage assembly 214, the second moving portion 2142, the second guide member 216, the first moving portion 2141 and the first guide member 215, the push-pull body 211 can automatically drive the second push body 2122 to accurately and smoothly flip to the first position or the second position relative to the first push body 2121 during pushing in or pulling out, thereby achieving a simple structure and a convenient operation.

In some embodiments, the first moving portion 2141 is a first rolling body, which is in rolling fit with the first bevel portion 2151. It may be understood that the first rolling body is in rolling fit with the first bevel portion 2151, and a rolling movement has a small resistance, so that the driving load can be reduced, and wear of the first rolling body can be avoided during movement relative to the first bevel portion 2151. It should be noted that the first rolling body may specifically be a bearing, which has the characteristics of low cost, high precision, and good rolling performance. Of course, in other embodiments, the first moving portion 2141 and the first bevel portion 2151 may also be in sliding fit, which is not specially limited herein.

In some embodiments, the second moving portion 2142 is a second rolling body, and the second rolling body is in rolling fit with the second bevel portion 2161. It may be understood that the second rolling body is in rolling fit with the second bevel portion 2161, and a rolling movement has a small resistance, so that the driving load can be reduced, and wear of the second rolling body can be avoided during movement relative to the second bevel portion 2161. It should be noted that the second rolling body may specifically be a bearing, which has the characteristics of low cost, high precision, and good rolling performance. Of course, in other embodiments, the second moving portion 2142 and the second bevel portion 2161 may also be in sliding fit, which is not specially limited herein.

In some embodiments, the second guide member 216 is of a triangular support structure. It may be understood that by means of the second guide member 216 of a triangular support structure, a contact area between the second guide member 216 and the second push body 2122 can be increased, and the structural stability of the second guide member 216 can be improved, so that the second guide member 216 has enough rigidity to support the flipping of the second push body 2122, thereby effectively avoiding deformation during the flipping.

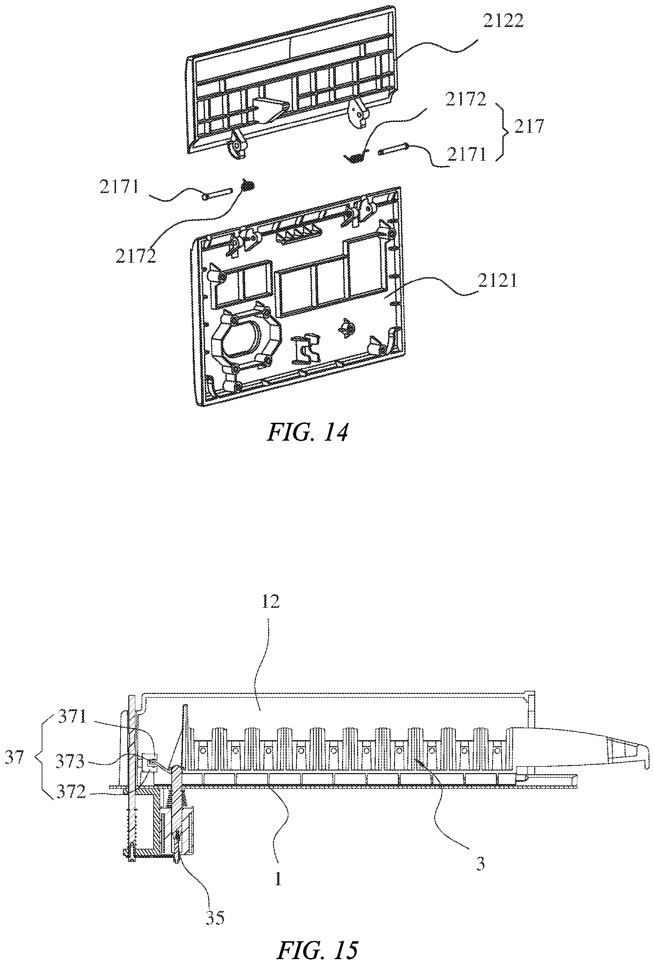

In some embodiments, as shown in FIG. 14, the push-pull device 21 further comprises a torsion structure 217. The torsion structure 217 comprises a rotating shaft 2171 and a torsion spring 2172, and the second push body 2122 is rotatably connected to the first push body 2121 by means of the rotating shaft 2171; and joints of the first push body 2121 and the second push body 2122 on a side close to the push-pull body 211 are connected to each other via the torsion spring 2172, such that the second push body 2122 forms a torsion force for flipping towards the push-pull body 211. It may be understood that the first push body 2121 and the second push body 2122 are rotatably connected to each other via the rotating shaft 2171, so that the first push body and the second push body can rotate smoothly, and the second push body 2122 forms, by means of the torsion spring 2172, a torsion force for flipping towards the push-pull body 211, such that when the second push body 2122 is pushed in place relative to the first channel 11, the second moving portion 2142 moves along the second bevel portion 2161 from the higher second end to the lower first end, and the second push body 2122 is smoothly flipped towards the push-pull body 211 under the action of the torsion spring 2172.

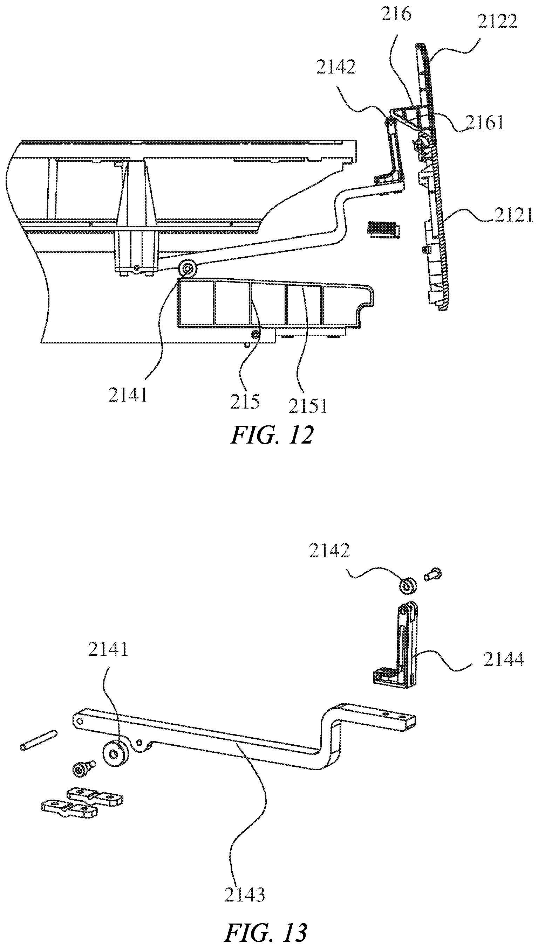

In some embodiments, as shown in FIG. 13, the linkage assembly 214 comprises a first rod body 2143 and a second rod body 2144 connected to a first end of the first rod body 2143. The first rod body 2143 is bent to form a Z shape, and a second end of the first rod body 2143 is connected to the push-pull body 211; and the second rod body 2144 is L-shaped, a short end of the second rod body 2144 is connected to the first rod body 2143, and a long end of the second rod body 2144 is connected to the second push body 2122. It may be understood that with the cooperation of the first rod body 2143 and the second rod body 2144, the first guide member 215 and the first moving portion 2141, and the second guide member 216 and the second moving portion 2142 that are located at different horizontal positions can be in transmission fit, thus driving the second push body 2122 to flip smoothly relative to the first push body 2121. It should be noted that the first rod body 2143 and the second rod body 2144 may be of an integrally formed structure or a split structure, which is not specially limited herein.

In some embodiments, as shown in FIG. 12, a carrying member 218 is arranged at a bottom of a joint between the first rod body 2143 and the second rod body 2144. It may be understood that when the push-pull body 211 is pulled out relative to the first channel 11, the first moving portion 2141 is staggered relative to the first bevel portion 2151. In this case, the carrying member 218 can carry the panel 212 to prevent the panel 212 from being suspended.

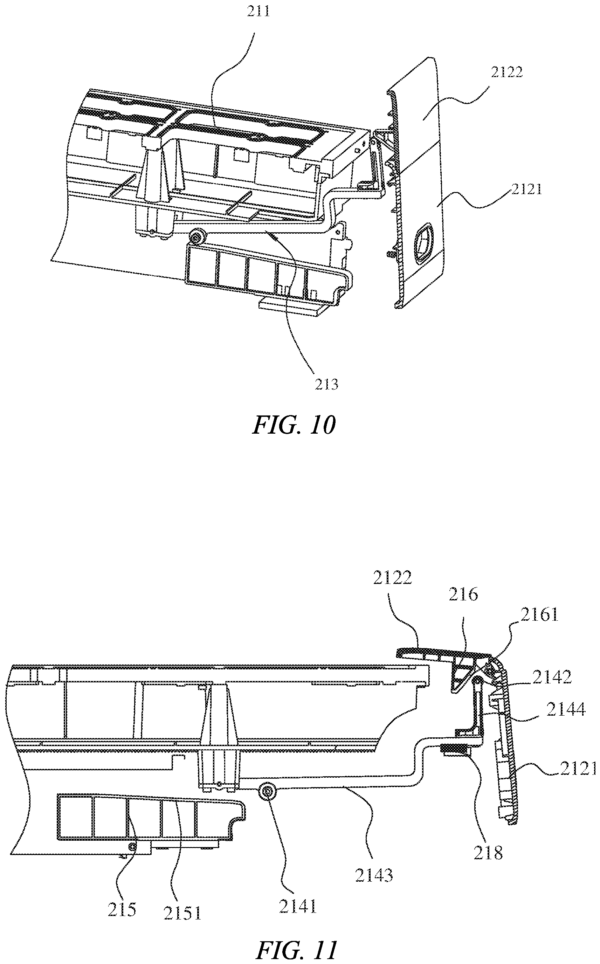

In some embodiments, as shown in FIGS. 11, 12 and 14, the rotating shaft 2171 is close to the outer end of the push-pull body 211, and the height of the rotating shaft 2171 corresponds to a top position of the push-pull body 211. For example, the rotating shaft 2171 at the joint between the first push body 2121 and the second push body 2122 has the same height as the outer end of the push-pull body 211, or is slightly higher than the outer end of the push-pull body 211, or slightly lower than the outer end of the push-pull body 211. Based on the push-pull state of the push-pull body 211, the second push body 2122 can be flipped relative to the first push body 2121 so as to be close to the push-pull body 211, to prevent the panel 212 from obstructing the loading or unloading operation of the staining device 2, or the second push body 2122 is flipped to form a complete covering surface with the first push body 2121 to cover the outer end of the push-pull body 211, to avoid affecting the overall aesthetics of the instrument. Specifically, in this embodiment, the height of the rotating shaft 2171 is consistent with the height of the top position of the push-pull body 211.

In some embodiments, as shown in FIGS. 4 and 15 to 20, the reagent storage device 3 comprises a rack 31, at least one reading module 32, and at least one transmitting module 33. The rack 31 is movably inserted into the second channel 12; and the reading module 32 is arranged in the mounting frame 1 and corresponds to the second channel 12. The at least one transmitting module 33 is arranged on the rack 31, and when the rack 31 moves to below the reading module 32, each reading module 32 reads information transmitted by each transmitting module 33. Specifically, the at least one transmitting module 33 may be arranged on the rack 31, each transmitting module 33 may correspond to one reagent, each reagent may be stored in a reagent bottle 4, and the reagent bottle 4 is arranged in the rack 31. In addition, the transmitting module 33 may also be arranged in the reagent bottle 4. The at least one reading module 32 is arranged at a position corresponding to the second channel 12, and each reading module 32 can read information transmitted by one transmitting module 33. Therefore, relevant information of a plurality of reagents can be read at the same time by providing a plurality of reading modules 32, to prevent the reagents from being mixed or taken wrong, and the user can conveniently know the relevant information of the reagents in real time at a terminal, without moving for many times or reading and writing for many times, so that the time for mechanical movement and the stay time for reading and writing can be saved, and the time of the staining process can be shortened.

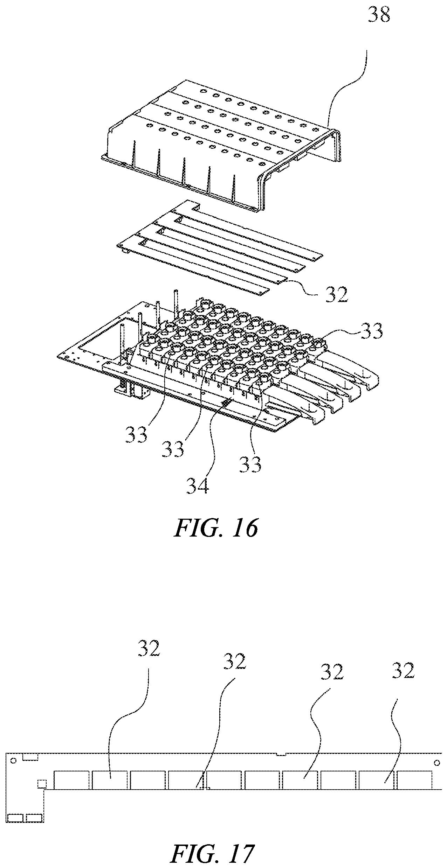

In some embodiments, as shown in FIGS. 16, 18 and 19, the automatic staining system 100 further comprises a second sliding pair 34. The second sliding pair 34 comprises a second slide rail 341 and a second sliding member 342. The second slide rail 341 is arranged in the second channel 12, the second sliding member 342 is slidably arranged in the second slide rail 341, the rack 31 is arranged on the second sliding member 342, and the second sliding member 342 is slidably arranged in the second slide rail 341. It may be understood that by sliding fit between the second slide rail 341 and the second sliding member 342, the rack 31 can smoothly slide back and forth in the second channel 12 along a direction of the second slide rail 341 for pulling, such that the rack 31 forms an open state or a closed state relative to the second channel 12. It should be noted that the rack 31 may also be driven by other moving pairs to move back and forth in the second channel 12 for pulling, which is not specially limited herein.

In some embodiments, the reading module 32 is an RFID reading module; and the transmitting module 33 is an RFID chip. It may be understood that one RFID chip is arranged corresponding to the position of each reagent bottle 4, the RFID chip stores relevant information of a reagent in the reagent bottle 4, and the RFID reading module reads the information in the RFID chip, which can adapt to the reagent bottle 4 sliding along the second channel 12 with the rack 31, and the relevant information of the reagent in the reagent bottle 4 is accurately and quickly read at the terminal after the reagent bottle 4 is pushed into the second channel 12, thus effectively avoiding adding a wrong reagent.

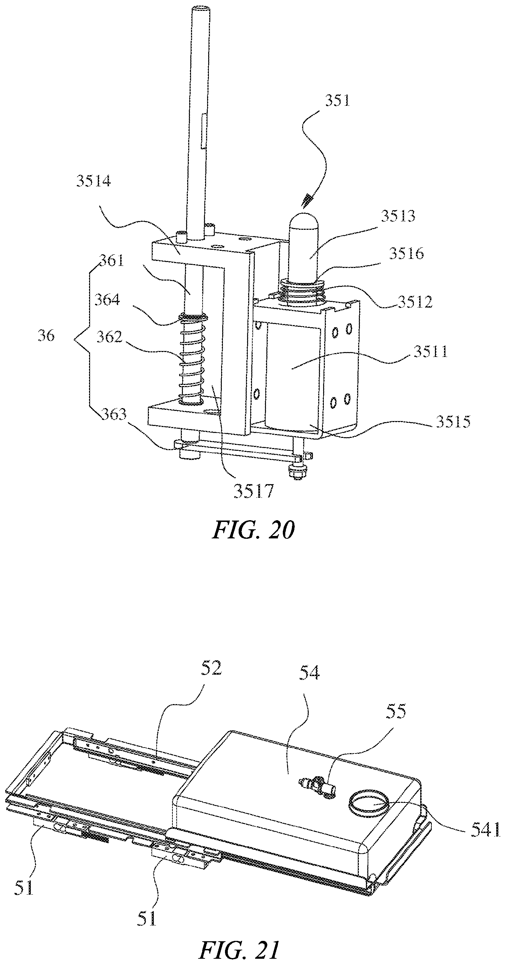

In some embodiments, as shown in FIGS. 15 and 20, the automatic staining system 100 further comprises a locking device 35. When the rack 31 is pushed into the second channel 12 and/or pushed out of the second channel 12, the rack 31 and the mounting frame 1 form a locked state by means of the locking device 35, such that the rack 31 can be locked relative to the position of the mounting frame 1, thereby preventing the rack 31 from continuing to move to affect reagent pipetting and other operations.

In some embodiments, the locking device 35 comprises a second electromagnetic assembly 351 and a second locking groove 352; the mounting frame 1 is provided with the second electromagnetic assembly 351 or the second locking groove 352 at an inner end and/or an outer end of the second channel 12, and the second locking groove 352 or the second electromagnetic assembly 351 is arranged at an inner end and/or an outer end of the rack 31; and when the rack 31 is pushed or pulled along the second channel 12 to cause the second electromagnetic assembly 351 to correspond to the second locking groove 352, the second electromagnetic assembly 351 is relatively locked to the second locking groove 352. It may be understood that with the cooperation of the second electromagnetic assembly 351 and the second locking groove 352, the rack 31 can be locked to the mounting frame 1 when in a pushed-in state or a pushed-out state relative to the second channel 12, thereby facilitating a reagent pipetting operation.

In some embodiments, the second electromagnetic assembly 351 comprises a second electromagnetic member 3511, a second acting member 3512, and a second locking shaft 3513. The second electromagnetic member 3511 and the second acting member 3512 are both connected to the second locking shaft 3513, the second locking shaft 3513 is vertically and movably arranged at the mounting frame 1 and located at the inner end of the second channel 12, and the second locking groove 352 is provided at the inner end of the rack 31; and the second acting member 3512 and the second electromagnetic member 3511 form opposing acting forces on the second locking shaft 3513 to drive the second locking shaft 3513 to be inserted into the second locking groove 352 or separated from the second locking groove 352. It may be understood that when the rack 31 is pushed into the second channel 12 in place, the second electromagnetic member 3511 is de-energized, and the second acting member 3512 drives the second locking shaft 3513 to move closer to the second locking groove 352, such that the second locking shaft 3513 is inserted and locked to the second locking groove 352. In this case, the rack 31 is locked to the mounting frame 1, facilitating a pipetting operation on the reagent bottle 4 on the rack 31. After the pipetting is completed, by energizing the second electromagnetic member 3511, the second locking shaft 3513 can move away from the second locking groove 352 under the action of the second electromagnetic member 3511, and the second locking shaft 3513 is unlocked relative to the second locking groove 352, so that the rack 31 can slide relative to the mounting frame 1 so as to be pulled out relative to the second channel 12. Therefore, the second acting member 3512 and the second electromagnetic member 3511 cooperate with each other to act on the second locking shaft 3513, so that the rack 31 can be quickly positioned and locked to the mounting frame 1, thereby facilitating reagent reading and other operations.

In some embodiments, the second electromagnetic assembly 351 further comprises a fixing frame 3514 connected to the mounting frame 1, the second locking shaft 3513 movably penetrates the fixing frame 3514, and the second electromagnetic member 3511 and the second acting member 3512 are sequentially sleeved on the second locking shaft 3513. Specifically, in this embodiment, the second acting member 3512 may be a spring. The fixing frame 3514 has a third limiting cavity 3515, the second electromagnetic member 3511 is arranged in the third limiting cavity 3515, and a limiting portion 3516 is arranged at a part of the second locking shaft 3513 that is arranged outside the third limiting cavity 3515. Two ends of the spring respectively abut against an outer wall of the third limiting cavity 3515 and the limiting portion 3516, and the second electromagnetic member 3511 and the second acting member 3512 are coaxially sleeved on the second locking shaft 3513, such that the spring can drive the second locking shaft 3513 to move closer to the mounting frame 1 and be locked to the second locking groove 352 after the second electromagnetic member 3511 is de-energized, and the second electromagnetic member 3511 drives the second locking shaft 3513 to move away from the mounting frame 1 and be unlocked from the second locking groove 352 after being energized.

In some embodiments, the locking device 35 further comprises an unlocking assembly 36 arranged on the fixing frame 3514; the unlocking assembly 36 is connected to the second locking shaft 3513; and the unlocking assembly 36 can drive the second locking shaft 3513 to move away from the second locking groove 352 and be unlocked from the second locking groove 352 under the action of an external force. It may be understood that when the second electromagnetic member 3511 is in an abnormal state or a de-energized state and needs to be manually unlocked, the user can apply a force to the unlocking assembly 36 by hand to move the second locking shaft 3513 away from the second locking groove 352 for an unlocking operation, thereby achieving a simple and convenient operation.

In some embodiments, the unlocking assembly 36 comprises an unlocking shaft 361, a third acting member 362 and a connecting rod 363 that are arranged on the fixing frame 3514. The unlocking shaft 361 movably penetrates the fixing frame 3514, and the unlocking shaft 361 and the second locking shaft 3513 are arranged in parallel. Specifically, the fixing frame 3514 has a fourth limiting cavity 3517, and the unlocking shaft 361 movably penetrates the fourth limiting cavity 3517. A first end of the unlocking shaft 361 extends out of a first end of the fixing frame 3514, and a second end of the unlocking shaft 361 is connected to the second locking shaft 3513 by means of the connecting rod 363 after extending out of a second end of the fixing frame 3514.

The third acting member 362 is arranged in the fourth limiting cavity 3517, and the third acting member 362 is sleeved on the unlocking shaft 361. The unlocking shaft 361 moves in the same action direction as the second electromagnetic member 3511 under the action of an external force, and the third acting member 362 forms an acting force on the unlocking shaft 361 in the same direction as the second acting member 3512. It may be understood that when the second electromagnetic member 3511 is in an abnormal state or in a de-energized state and needs to be manually unlocked, the user applies a force to press the first end of the unlocking shaft 361, so as to drive the connecting rod 363 and the second locking shaft 3513 to move away from the second locking groove 352, thus completing the purpose of manual unlocking. After the unlocking is completed, the user releases the first end of the unlocking shaft 361 and the second locking shaft 3513 is driven to move closer to the second locking groove 352 under the action of the third acting member 362 to form a locked state. Specifically, in this embodiment, the third acting member 362 is a first elastic member, which may be specifically a spring. The unlocking shaft 361 is provided with a stopper 364 in the fourth limiting cavity 3517. The first elastic member is sleeved on the unlocking shaft 361 at a position between the stopper 364 and a groove wall of the fourth limiting cavity 3517 that is close to the second end of the unlocking shaft 361. When the user applies a force to the unlocking shaft 361 to move the unlocking shaft away from the second locking groove 352, the first elastic member is in a compressed state, so that the state in which the second locking shaft 3513 is locked to the second locking groove 352 can be restored under the action of an elastic force of the first elastic member itself after the external force disappears.

In some embodiments, as shown in FIG. 15, the mounting frame 1 is provided with an optocoupler switch 37 inside the second channel 12, and the optocoupler switch 37 is configured to detect whether the rack 31 is pushed inwardly to the inner end of the second channel 12. Specifically, the mounting frame 1 is provided with the optocoupler switch 37 at the inner end of the second channel 12. It may be understood that the optocoupler switch 37 comprises a generator 371 and a receiver 372 that are arranged in a height direction of the rack 31, and there is a gap between the generator 371 and the receiver 372. A blocking member 373 is arranged on the rack 31 at the inner end of the second channel 12, and when the rack 31 is pushed into the inner end of the second channel 12, the blocking member 373 is accommodated in the gap to block the communication between the generator 371 and the receiver 372, so that whether the rack 31 is pushed in place can be detected by the optocoupler switch 37.

In some embodiments, as shown in FIG. 16, the mounting frame 1 is provided with a mounting cap 38 in the second channel 12, and reading modules 32 are dispersedly arranged on a side of the mounting cap 38 close to the rack 31, to read information of reagent bottles 4 on the rack 31.

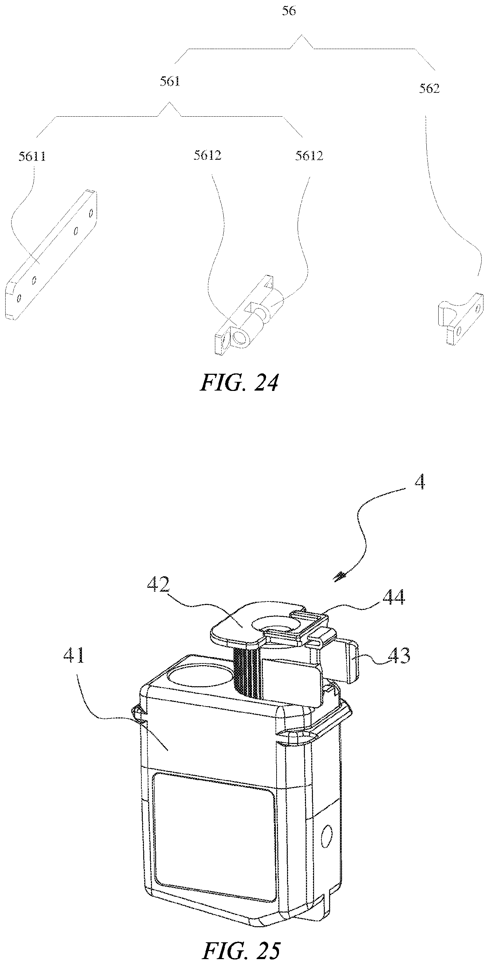

In some embodiments, as shown in FIGS. 25 to 33, the reagent storage device 3 comprises a reagent bottle 4, and the reagent bottle 4 is arranged on the rack 31; the reagent bottle 4 comprises a body 41, a bottle cap 42, a first fitting member 43, and a second fitting member 44; and the body 41 has an accommodating cavity 413 and a first opening 414 in communication with the accommodating cavity 413, the bottle cap 42 movably covers the first opening 414 of the body 41, and the body 41 is arranged on the rack 31. It should be noted that the accommodating cavity 413 of the body 41 is configured to load a reagent. When the bottle cap 42 moves to be opened relative to the first opening 414 of the body 41, the reagent can be pipetted, and after the pipetting, the bottle cap 42 moves to cover the first opening 414 of the body 41 to form a sealed state.

The first fitting member 43 is arranged on the body 41, and the second fitting member 44 is arranged on the bottle cap 42. When the bottle cap 42 moves to be opened relative to the first opening 414 of the body 41, the bottle cap 42 is fixed to the body 41 through fitting between the second fitting member 44 and the first fitting member 43, such that the corresponding bottle cap 42 can be fixed to the body 41 in the open state. It is possible to effectively ensure that the bottle cap 42 will not hinder a liquid drawing operation during use; and the first fitting member 43 is separated from the second fitting member 44 after use, and the user can quickly cover the first opening 414 of the body 41 with the bottle cap 42 after liquid drawing is completed, so as to avoid mistakes. In addition, it should be noted that in other embodiments, the bottle cap 42 of the reagent bottle 4 may comprise a first cap member and a second cap member movably covering the first cap member, the first cap member covers the first opening 414 of the body 41, the first fitting member 43 is arranged on the first cap member, and the second fitting member 44 is arranged on the second cap member; and when the second cap member moves to be opened relative to the first cap member, the first cap member is fixed to the second cap member by fitting the first fitting member 43 with the second fitting member 44. That is, the first fitting member 43 and the second fitting member 44 are both arranged on the bottle cap 42, such that the first cap member can be fixed relative to the second cap member.

To sum up, the bottle cap 42 of the reagent bottle 4 movably covers the first opening 414 of the body 41; when the bottle cap 42 moves to be opened relative to the first opening 414 of the body 41, a reagent pipetting operation can be performed, and a sealed state can be formed by moving the bottle cap 42 to cover the first opening 414 of the body 41. Through mutual fitting between the first fitting member 43 of the body 41 and the second fitting member 44 of the bottle cap 42, when in an open state, the bottle cap 42 can be fixed to the body 41 through the fitting between the second fitting member 44 and the first fitting member 43, with no need to separate the bottle cap 42 from the body 41, thus effectively avoiding the storage problems and cross-contamination problems of the bottle cap 42 in the open state. Moreover, the bottle cap 42 will not hinder a liquid drawing operation during use, and the user can conveniently and quickly cover the first opening 414 of the body 41 with the bottle cap 42 after liquid drawing is completed, so as to avoid mistakes.

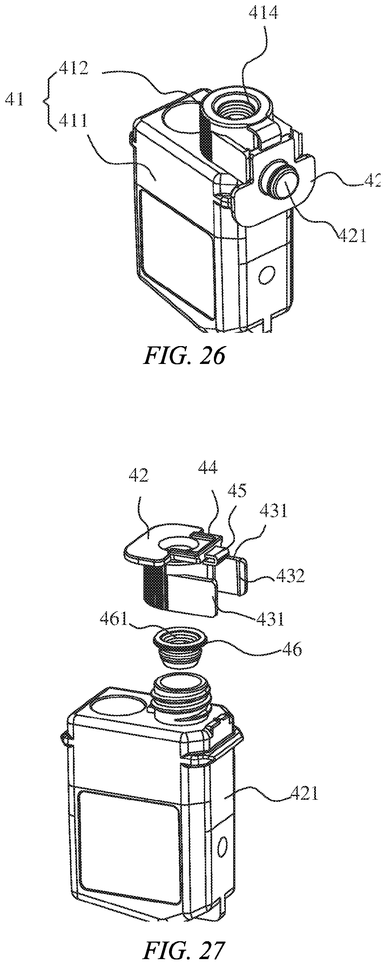

In some embodiments, as shown in FIGS. 26, 27 and 29, the reagent bottle 4 further comprises a connecting member 45, and the connecting member 45 is at least partially of a flexible and bendable structure; and the bottle cap 42 is in hinged connection with the body 41 by means of the connecting member 45. It may be understood that a hinged shaft can be formed at the flexible and bendable structure of the connecting member 45, such that the bottle cap 42 can rotate relative to the body 41 with the flexible and bendable structure of the connecting member 45 as the hinged shaft, and the bottle cap 42 can quickly rotate to cover the first opening 414 of the body 41 or be opened relative to the first opening 414 of the body 41. Specifically, in this embodiment, a flexible and bendable structure is formed in the middle of the connecting member 45, such that the bottle cap 42 can smoothly rotate to the body 41 for fixing.

In some embodiments, as shown in FIGS. 25 and 26, an outer wall of the body 41 on a side close to the connecting member 45 is provided with an engagement groove, and the engagement groove is the first fitting member 43; the bottle cap 42 is provided with an engagement block, and the engagement block is the second fitting member 44; and the bottle cap 42 is connected to the outer wall of the body 41 by engaging the engagement block with the engagement groove. It may be understood that when the bottle cap 42 moves closer to the outer wall of the body 41, the bottle cap 42 can be tightly engaged in the engagement groove in the outer wall of the body 41 by means of the engagement block, such that the bottle cap 42 can be firmly fixed to the body 41 in the open state, and the engagement block can be separated relative to the engagement groove under the action of an external force, thereby conveniently covering the body 41 with the bottle cap 42 after the liquid drawing is completed, and achieving a simple and convenient operation. Of course, in other embodiments, the body 41 and the bottle cap 42 may also be connected to each other by means of other detachable connections, such as a magnetic structure, which is not specially limited herein.

In some embodiments, as shown in FIG. 27, the reagent bottle 4 further comprises two engagement plates 431, the two engagement plates 431 are vertically arranged spaced apart at the outer wall of the body 41, and the two engagement plates 431 extend out of the body 41 and cooperate with each other to form the engagement groove. Specifically, in this embodiment, one side of each engagement plate 431 opposite to the other engagement plate 431 is provided with an engagement protrusion 432, and the two engagement protrusions 432 jointly restrict the engagement block, thus effectively preventing the engagement block from disengaging when the engagement block is tightly engaged in the engagement groove.

In some embodiments, as shown in FIGS. 26 to 29, the body 41 comprises a bottle body 411 and a connecting body 412. The bottle body 411 has an accommodating cavity 413, and the connecting body 412 is detachably sleeved at a bottle mouth end of the bottle body 411. One end of the connecting body 412 away from the bottle mouth end has a first opening 414 in communication with the accommodating cavity 413, and the first fitting member 43 is arranged at a side wall of the connecting body 412. It may be understood that with the detachable connection of the connecting body 412, and by configuring the connecting body 412 to fix the bottle cap 42 in a flipped state by means of the first fitting member 43, the connecting body 412 can be replaced when being damaged due to that the bottle cap 42 rotates frequently relative to the connecting body 412, so as to improve the utilization rate of the reagent bottle 4. It should be noted that the connecting body 412 may form a part of the bottle together with the bottle body 411, or the connecting body 412 and the bottle cap 42 may form a cover body structure, which is not specially limited herein. Therefore, the bottle cap 42 can relatively rotate relative to the connecting body 412 of the bottle or the cover body structure.

Specifically, in this embodiment, an outer peripheral wall of the bottle body 411 close to the bottle mouth end is provided with an external thread, and an inner wall of the connecting body 412 is provided with an internal thread. The connecting body 412 is sleeved at the bottle mouth end of the bottle body 411, and the connecting body 412 and the bottle body 411 form a threaded connection by fitting the external thread with the internal thread. This not only can increase a contact area between the connecting body 412 and the bottle body 411 and improve the sealing performance therebetween, but can also firmly connect the connecting body 412 to the bottle body 411 and facilitate disassembly. Of course, in other embodiments, the bottle body 411 may also be connected to the connecting body 412 by means of engagement, etc., which is not specially limited herein.

In some embodiments, as shown in FIGS. 26 to 29, the body 41 further comprises a sealing member 46. The sealing member 46 is detachably inserted into the bottle mouth end of the bottle body 411, and the sealing member 46 is arranged in the connecting body 412. It may be understood that the sealing member 46 is inserted into an inner wall of the bottle mouth end of the bottle body 411, and the connecting body 412 is sleeved on an outer wall of the bottle mouth end, so that the sealing member 46 can effectively compensate for a dimensional deviation between the bottle body 411 and the connecting body 412, and further improve the sealing performance.

In some embodiments, one end of the sealing member 46 close to the first opening 414 is recessed towards a position of the accommodating cavity 413 to form a groove 461, and one end of the bottle cap 42 close to the connecting body 412 protrudes downwardly to form a projection 421. When the bottle cap 42 covers the first opening 414 of the connecting body 412, the projection 421 is inserted into the groove 461 to form a sealing surface structure. It may be understood that when the connecting body 412 is tightened relative to the bottle body 411, a first-layer sealing structure is formed between the connecting body 412 and the bottle body 411, and a second-layer sealing structure is formed between the sealing member 46 and the bottle cap 42 after the bottle cap 42 is snapped into the first opening 414 of the connecting body 412. The double-layer sealing structure can further effectively improve the sealing performance, and when the bottle cap 42 is opened, the sealing member 46 can still provide a good sealing performance, so that reagent volatilization, tipping and leakage can be effectively avoided.

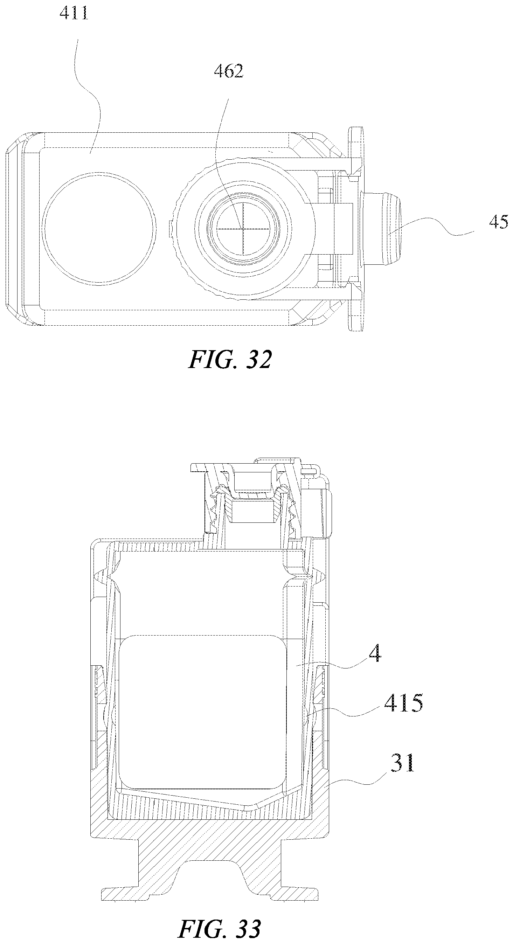

In some embodiments, as shown in FIG. 32, the sealing member 46 is of an elastic deformation structure, and at least part of the sealing member 46 corresponding to a bottle mouth of the bottle body 411 is provided with a pierceable portion that can be pierced and recover the deformation after being pierced. It may be understood that the pierceable portion can be pierced by means of a sampling needle, etc., and then a reagent is drawn, and after the sampling needle is removed upon the completion of the pipetting, the deformation can be recovered by means of the elastic deformation ability of the sealing member 46, thereby achieving a good sealing performance, and effectively avoiding reagent volatilization, tipping and leakage. In another embodiment, the sealing member 46 comprises an annular sealing body and elastic sheets arranged in a radial direction of the sealing body, each elastic sheet covers an annular structure of the sealing body, and two adjacent elastic sheets abut against each other, and can be separated from each other under the action of an external force to form a second opening 462. When a reagent needs to be pipetted, a reagent needle can be easily inserted into the second opening 462 to enter the accommodating cavity 413 to draw the reagent, and after the drawing is completed, the second opening 462 of the sealing member 46 can recover the deformation to form a closed second opening 462, thereby achieving a good sealing performance and effectively avoiding reagent volatilization, tipping and leakage. Specifically, the sealing member 46 may be a component having elastic properties, such as silicone, the elastic sheets cooperate to form a cross-shaped second opening 462, and the center of the second opening 462 is coaxially arranged with the first opening 414.

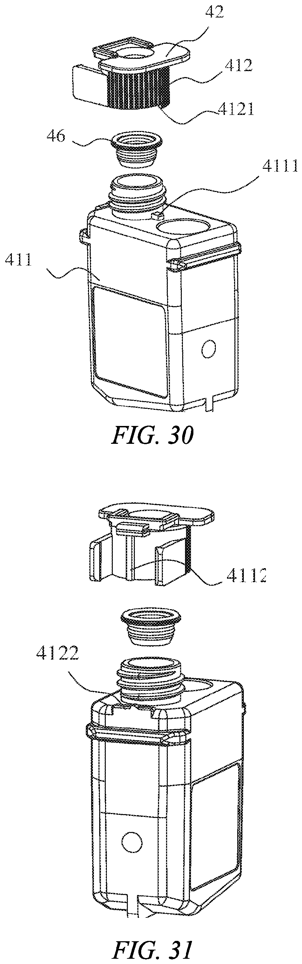

In some embodiments, as shown in FIGS. 30 and 31, one end of the connecting body 412 close to the bottle body 411 is provided with a first notch 4121, a rotation stopping boss 4111 is arranged at the bottle mouth end of the bottle body 411, and the connecting body 412 moves until the first notch 4121 abuts against the rotation stopping boss 4111, to form a relatively fixed state with the bottle body 411. It may be understood that when the connecting body 412 moves to the bottom near the bottle mouth end of the bottle body 411, the first notch 4121 of the connecting body 412 may come into contact with the rotation stopping boss 4111 on the bottle body 411. In this case, the first notch 4121 can limit the continuous movement of the rotation stopping boss 4111, so that when the connecting body 412 rotates until the first notch 4121 abuts against the rotation stopping boss 4111, the connecting body 412 forms a fixed state relative to the bottle body 411. Therefore, a relative distance between an end surface of the bottle mouth of the bottle body 411 and an inner end surface of the connecting body 412 is ensured, the sealing reliability is improved, and relative positions of the bottle cap 42 and the bottle body 411 can be accurately positioned.

In some embodiments, an outer wall of the connecting body 412 on a side opposite to the first notch 4121 is provided with an anti-loosening rib 4122, and an outer wall of the bottle body 411 on a side opposite to the rotation stopping boss 4111 is provided with an anti-loosening boss 4112; and when the first notch 4121 abuts against the rotation stopping boss 4111, the anti-loosening rib 4122 abuts against the anti-loosening boss 4112, and the first notch 4121 and the anti-loosening rib 4122 are both located between the rotation stopping boss 4111 and the anti-loosening boss 4112. It may be understood that when the connecting body 412 needs to be opened relative to the bottle body 411, the anti-loosening rib 4122 of the connecting body 412 may interfere with the anti-loosening boss 4112 of the bottle body 411, and it is necessary to overcome plastic deformation of the connecting body 412 and the bottle body 411 before the connecting body 412 can be opened, so that the problem of liquid leakage caused by the loosening of the connecting body 412 relative to the bottle body 411 during transportation can be effectively prevented.

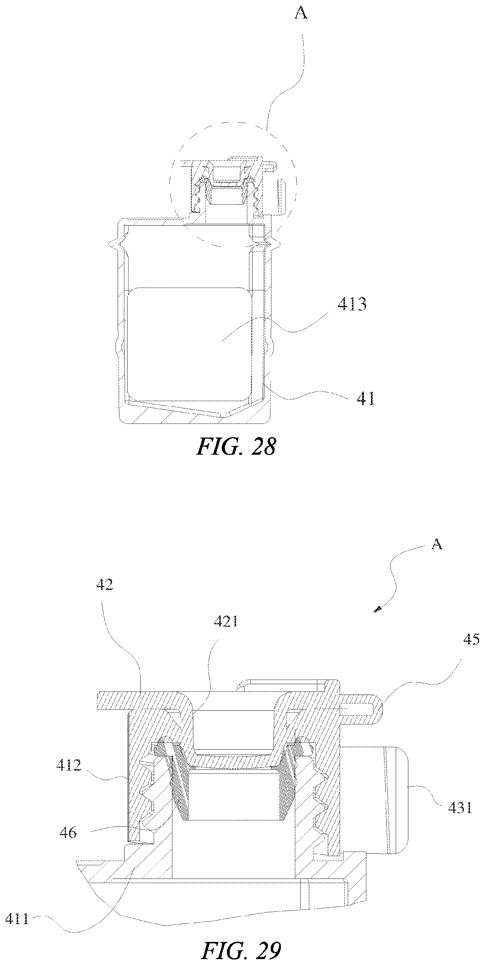

In some embodiments, as shown in FIG. 28, a cavity wall of the accommodating cavity 413 on a side opposite to the first opening 414 is inclined towards the other side away from the first opening 414 to form an inverted triangle structure, and a bend of the inverted triangle structure is arranged opposite to the first opening 414. It may be understood that the inverted triangle structure can form a low end of the accommodating cavity 413, and the bend of the inverted triangle structure is the lowest end. With the arrangement of the bend of the inverted triangle structure opposite to the first opening 414, reagent drawing by the reagent needle can be facilitated, reagent residue can be effectively avoided, and an area with an invalid volume can be effectively reduced. It should be noted that in other embodiments, the cavity wall of the accommodating cavity 413 on the side opposite to the first opening 414 may also be recessed to form a cylindrical shape, a square shape, etc., which is not specially limited herein.

In some embodiments, as shown in FIG. 33, the outer wall of the body 41 is provided with a positioning bump 415, and a reagent reservoir is formed in the rack 31. A reservoir wall of the reagent reservoir is provided with a positioning hole, the body 41 is inserted into the reagent reservoir, and the positioning bump 415 is engaged into the positioning hole. By the cooperation of the positioning bump 415 and the positioning hole, a direction in which the reagent bottle 4 is inserted into the reagent reservoir can be positioned, so that the reagent bottle 4 can be accurately positioned in the reagent reservoir, thereby effectively preventing the reagent bottle 4 from loosening relative to the reagent reservoir.

In some embodiments, as shown in FIGS. 21 to 24, the automatic staining system 100 further comprises a liquid tank 5 arranged on the mounting frame 1. A weighing device is arranged between the liquid tank 5 and the mounting frame 1. The liquid tank 5 is configured to store a buffer solution, and sufficient buffer solution must be added before the staining process starts. It may be understood that with the arrangement of the weighing device between the mounting frame 1 and the liquid tank 5, weighing can be performed in real time by the weighing device, and the volume of the liquid in the liquid tank 5 can be measured in real time by means of a software algorithm and may be displayed in the terminal, so that the user can know the remaining amount in the liquid tank 5 in real time, thereby effectively preventing the influence of a too small remaining amount of the buffer solution on the staining effect.

In some embodiments, the weighing device comprises a fixed portion 521, a movable portion 522, and a weighing sensor 51. The movable portion 522 is movably arranged on the fixed portion 521, and the liquid tank 5 is arranged on the movable portion 522.

As shown in FIG. 4, the mounting frame 1 is provided with a third channel 18, the fixed portion 521 is arranged in the third channel 18 by means of the weighing sensor 51, and the movable portion 522 is movably pulled in the third channel 18 in an extension direction of the fixed portion 521. It may be understood that by configuring the liquid tank 5 carried on the movable portion 522 to be independently and movably inserted into the third channel 18, when an alarm is given in the case of a low level of the buffer solution, the liquid tank 5 can be pulled out of the third channel 18 for liquid adding, and a use state of the staining device 2 or the reagent storage device 3 will not be affected during adding of the buffer solution. The liquid tank can be independently pulled out for a liquid adding operation or work. Weighing can be performed by the weighing sensor 51 in real time during pulling of the liquid tank 5, and the volume of the liquid in the liquid tank 5 can be detected in real time by means of the software algorithm and may be displayed in the terminal, so that the buffer solution can be added without the need for shutdown, thereby ensuring the smooth progress of the staining process.

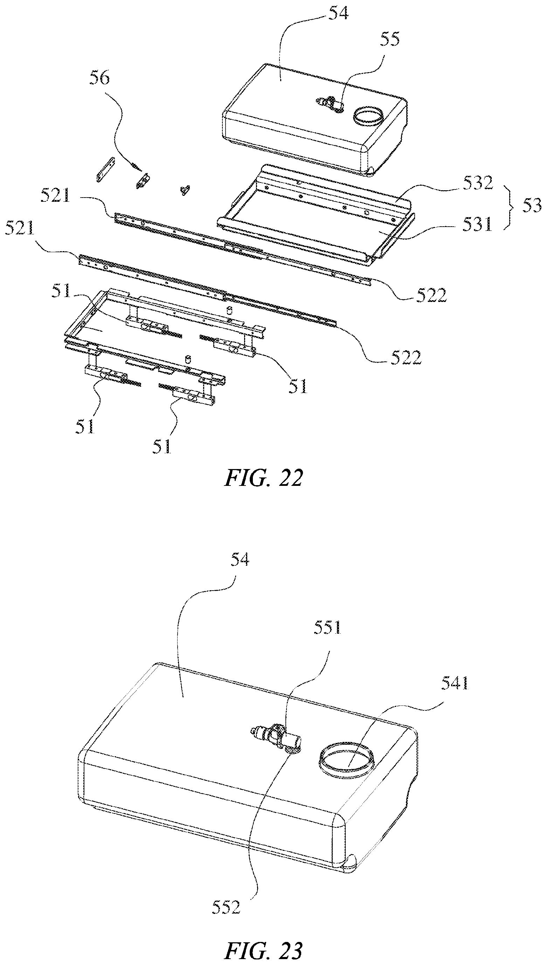

In some embodiments, as shown in FIGS. 21 and 22, the weighing device comprises a third sliding pair 52. The third sliding pair 52 comprises a third slide rail and a third sliding member; and the third slide rail is arranged on the mounting frame 1 in an extension direction of the third channel 18, the third slide rail is the fixed portion 521, the third sliding member is slidably arranged in the third slide rail, and the third sliding member is the movable portion 522. It may be understood that by sliding fit between the third slide rail and the third slide rail, the liquid tank 5 can smoothly slide back and forth in the third channel 18 along a direction of the third slide rail for pulling, such that the liquid tank 5 forms an open state or a closed state relative to the third channel 18. It should be noted that the liquid tank 5 may be driven by other moving pairs to move back and forth in the third channel 18 for pulling, which is not specially limited herein.

In some embodiments, two third slide rails are provided, the two third slide rails are arranged side-by-side on the mounting frame 1 in a width direction of the third channel 18, two third sliding members are provided, the third sliding members are arranged in a one-to-one correspondence with the third slide rails, and the two third sliding members jointly carry the liquid tank 5. It may be understood that with the cooperation of the two third slide rails and the two third slide rails, the liquid tank 5 can smoothly slide in the third channel 18 of the mounting frame 1, thereby improving the structural stability.

In some embodiments, as shown in FIG. 22, four weighing sensors 51 are arranged, and the four weighing sensors 51 are uniformly arranged around the fixed portion 521. It may be understood that the four weighing sensors 51 are uniformly arranged around the fixed portion 521, so that the liquid tank 5 can always be in the sensing range of the weighing sensors 51 during sliding relative to the fixed portion 521, thus effectively avoiding a weighing error caused by a local sensing error, and providing the characteristics of simple structure and high weighing accuracy. Of course, in other embodiments, there may be a different number of weighing sensors 51, such as three or five, which is not specially limited herein.

In some embodiments, as shown in FIGS. 22 and 24, the automatic staining system 100 further comprises a second self-locking device 56 and a supporting member 53. The liquid tank 5 is arranged on the movable portion 522 by means of the supporting member 53. The second self-locking device 56 comprises a locking groove body 561 and a locking member 562; the locking groove body 561 or the locking member 562 is arranged at an inner end and/or an outer end of the fixed portion 521, the locking member 562 or the locking groove body 561 is arranged at an inner end and/or an outer end of the supporting member 53, and when the supporting member 53 is pushed and pulled to the third channel 18 and the locking member 562 corresponds to the locking groove body 561, the locking member 562 is locked to the locking groove body 561. It may be understood that when the supporting member 53 is pushed and pulled into the third channel 18 in place, the liquid tank 5 can be positioned and locked in the third channel 18 through cooperation of the locking member 562 and the locking groove body 561, thus effectively preventing the liquid tank 5 from sliding relative to the third channel 18 to affect the staining effect or the liquid adding operation. It should be noted that in other embodiments, the second self-locking device 56 or the locking device 35 may also be used for locking between the mounting frame 1 and the staining device 2, the second self-locking device 56 or the first self-locking device 16 may also be used for locking between the mounting frame 1 and the rack 31 of the reagent storage device 3, and the exchange of the first self-locking device 16, the second self-locking device 56 and the locking device 35 for locking can also achieve operations of quick locking and quick unlocking.

In some embodiments, the locking groove body 561 is provided at the inner end of the fixed portion 521, and the locking member 562 is arranged at the inner end of the supporting member 53; the locking groove body 561 comprises a locking seat 5611, the locking seat 5611 is provided with a locking groove, and the locking seat 5611 is provided with elastic clamping members 5612 on two sides of the locking groove; and the two elastic clamping members 5612 are arranged oppositely to form a clamping space, and the locking member 562 is clamped in the clamping space. It may be understood that the deformable clamping space is formed by two elastic clamping members 5612, so that the locking member 562 can be firmly clamped in the clamping space under the action of elastic forces of the elastic clamping members 5612, and can overcome the elastic forces of the elastic clamping members 5612 under the action of an external force, such that the locking member 562 can be detached from the clamping space for unlocking, thereby achieving a simple and convenient operation.

In some embodiments, a peripheral wall of the locking member 562 is arc-shaped, and a radial area of a first end of the locking member 562 away from the supporting member 53 is greater than a radial area of a second end of the locking member close to the supporting member 53; and the elastic clamping members 5612 each comprise a sphere and a second elastic member, the spheres are connected to the locking seat 5611 by means of the second elastic members, and the two spheres cooperate with each other to form an arc-shaped clamping space adapted to the shape of the locking member 562. It may be understood that arc-shaped cooperation and clamping formed between the locking member 562 and the two spheres not only enables the locking member 562 to smoothly slide into the arc-shaped clamping space formed by the two spheres for clamping, but also enables the locking member 562 to smoothly slide out of the arc-shaped clamping space under the action of an external force when unlocking is needed.

In some embodiments, as shown in FIGS. 22 and 23, the liquid tank 5 comprises a liquid tank body 54 and an adapter 55 arranged on the liquid tank body 54. The liquid tank body 54 is arranged on the supporting member 53, and the adapter 55 comprises a first joint 551 and a second joint 552 perpendicularly connected to the first joint 551; and the first joint 551 faces a sliding direction of the third slide rail, and the second joint 552 extends into the liquid tank body 54 and faces a bottom of the liquid tank body 54. It may be understood that the adapter 55 is configured to be mounted on the liquid tank body 54, the second joint 552 extends to the bottom of the liquid tank body 54 by means of an external Teflon tube, and another section of the first joint 551 is connected to a pump assembly of an external instrument, so that when the liquid tank body 54 is moved, the first joint 551 on the liquid tank body 54 can always be connected to the pump assembly without the need for shutdown. In addition, the supporting member 53 comprises a bottom disc 531 and a side enclosing plate 532 connected to the bottom disc 531, and the bottom disc 531 and the side enclosing plate 532 cooperate with each other to form a carrying groove. It may be understood that the supporting member 53 carries the liquid tank body 54, and the liquid tank body 54 is limited by the carrying groove, so that the liquid tank body 54 is effectively prevented from sliding down relative to the carrying groove in a state of sliding or stopping, etc. A buffer solution is stored in the liquid tank body 54, and the liquid tank body 54 can be detached relative to the supporting member 53 for liquid adding or the liquid tank body 54 can be replaced, thereby achieving a simple and convenient operation.

In some embodiments, the liquid tank body 54 has a sample adding port 541, and the sample adding port 541 is provided at an outlet of the liquid tank body 54 close to the third channel 18. When the liquid tank body 54 is pulled out of the instrument, the sample adding port 541 of the liquid tank body 54 can be completely exposed to the outside, and the liquid tank body 54 can be pushed into the third channel 18 after the sample adding is completed.

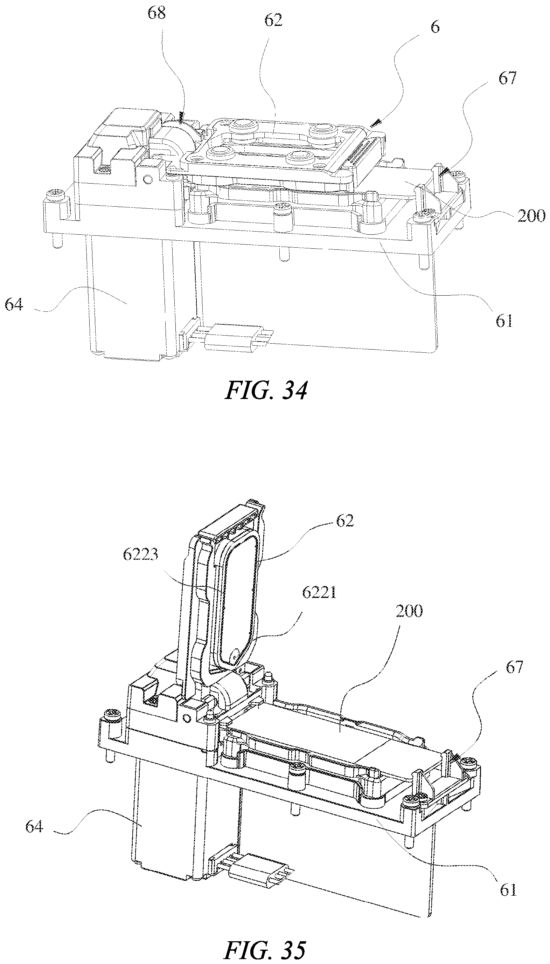

In some embodiments, as shown in FIGS. 34 to 42, the staining device 2 comprises a staining module 6 arranged on the mounting frame 1. Specifically, the staining module 6 is arranged on the push-pull body 211 of the push-pull device 21.

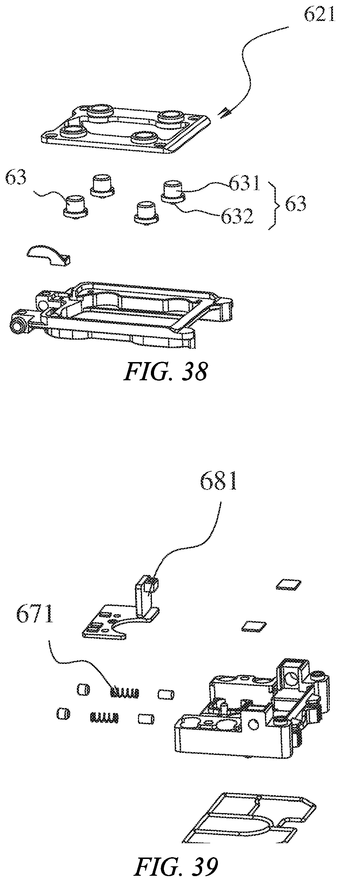

As shown in FIG. 38, the staining module 6 comprises a cover 62, and the cover 62 comprises a first cover body 621; and the first cover body 621 is provided with an insertion groove 6211, a third elastic member 63 is arranged in the insertion groove 6211, and an elastic travel space for the third elastic member 63 is provided in the insertion groove 6211. It may be understood that the first cover body 621 is configured to cooperate with other components of the staining module 6 to form a staining cavity, and the first cover body 621 is provided with the insertion groove 6211, so that a plate such as the second cover body 622 can be inserted into the first cover body 621 to form an elastic cover 62 according to staining requirements and the position of the first cover body 621 relative to the other components of the staining module 6. Therefore, under the action of an external force, the position of the cover 62 relative to the other components of the staining module 6 can be changed to change the size of the staining cavity, so as to adapt to slides 200 with different thicknesses, and be closely attached to the slides 200 with different thicknesses to ensure the sealing performance, so that the staining module 6 can be modularized and unitized to achieve a simple structure, thereby reducing the difficulty of maintenance and replacement.

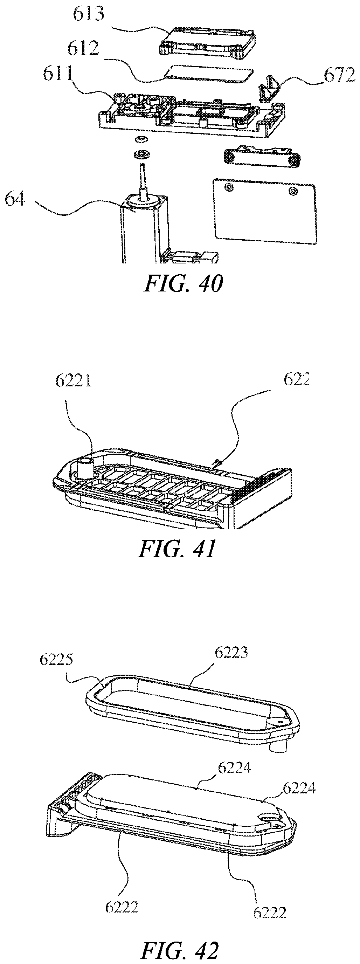

In some embodiments, as shown in FIGS. 34 and 40, the cover 62 further comprises a second cover body 622, the second cover body 622 is inserted into the insertion groove 6211, two ends of the third elastic member 63 respectively elastically abut against the second cover body 622 and a groove wall of the insertion groove 6211, the height of the insertion groove 6211 is greater than the thickness of the second cover body 622, and one end of the second cover body 622 that faces away from the third elastic member 63 at least partially extends out of the first cover body 621. It may be understood that by overcoming the elastic acting force of the third elastic member 63, the second cover body 622 can move up and down in the insertion groove 6211 to adapt to different thicknesses of the slides 200.

In some embodiments, as shown in FIGS. 34 and 35, the staining module 6 comprises a seat 61 and the cover 62 described above. The first cover body 621 is movably connected to the seat 61, such that the first cover body 621 moves closer to the seat 61 to cover the seat 61 so as to form a staining cavity, or moves away from the seat 61 to be in an open state relative to the seat 61. The second cover body 622 is elastically inserted into the insertion groove 6211 and extends out of one side of the first cover body 621 close to the seat 61. When the first cover body 621 moves to cover the seat 61, the staining cavity is formed between the second cover body 622 and the seat 61. It may be understood that when it is necessary to stain a slide 200, the first cover body 621 moves to cover the seat 61, and the second cover body 622 and the seat 61 form the staining cavity for staining of the slide 200. After the staining is completed, the first cover body 621 moves to be opened relative to the seat 61. In this case, the second cover body 622 moves away from the seat 61, so as to load or unload the slide 200. In addition, the second cover body 622 is provided with a sample introduction hole 6221 in communication with the staining cavity, and a staining reagent can enter the staining cavity through the sample introduction hole 6221 to stain a tissue carried by the slide 200. The reagent required by each staining step is drawn by the pipetting device and injected into the staining cavity for staining.

To sum up, the staining module 6 is movably connected to the seat 61 by means of the first cover body 621. When the first cover body 621 moves to cover the seat 61, the second cover body 622 inserted into the insertion groove 6211 of the first cover body 621 and the seat 61 can form the staining cavity for fixing and staining the slide 200. The second cover body 622 is elastically inserted into the insertion groove 6211 of the first cover body 621, so that the second cover body 622 can be elastic, and the size of the staining cavity can be changed under the action of an external force, to adapt to slides 200 with different thicknesses, and be closely attached to the slides 200 with different thicknesses to ensure the sealing performance, and the staining function can be modularized and unitized to achieve a simple structure, thereby reducing the difficulty of maintenance and replacement.

In some embodiments, as shown in FIGS. 34 to 36, a first end of the first cover body 621 is connected to the seat 61, and the first cover body 621 rotates around a joint between the first cover body itself and the seat 61; and the sample introduction hole 6221 of the second cover body 622 is provided in the second cover body 622 close to the joint between the first cover body 621 and the seat 61. It may be understood that when a sample introduction operation is performed, the first cover body 621 rotates to a preset angle relative to the seat 61, for example, the first cover body 621 forms a 4° angle with the seat 61. In this case, the second cover body 622 is not in contact with the seat 61, and there is a gap. The pipetting device draws a reagent needed for each staining step and injects the reagent into the sample introduction hole 6221, and the reagent enters a gap between the second cover body 622 and the slide 200 through the sample introduction hole 6221. The reagent is concentrated at a root of the slide 200 near the sample introduction hole 6221. Then the first cover body 621 continues to rotate relative to the seat 61, and the second cover body 622 and the slide 200 have an angle therebetween becoming smaller and gradually come into contact. The staining cavity gradually becomes smaller, and the second cover body 622 squeezes the reagent to spread from the root of the slide 200 to an entire working surface of the slide 200 until the reagent spreads over the entire working surface for staining. Then, the reagent continues to be injected into the sample introduction hole 6221, and the first cover body 621 is rotated relative to the seat 61, so that the reagent is in continuous contact on the slide 200 in the form of waves, to achieve sufficient staining. After the staining is completed, the first cover body 621 is rotated relative to the seat 61 so as to be gradually opened. In this case, the second cover body 622 and the slide 200 have an angle therebetween becoming larger and gradually move away from each other, and the staining cavity gradually becomes larger. Due to the tension, the reagent is gathered around the sample introduction hole 6221 of the second cover body 622 from all parts of the slide 200. In this case, the reagent can be drawn out from the sample introduction hole 6221 by the pipetting device. Therefore, the first cover body 621 is rotatably connected to the seat 61, and the sample introduction hole 6221 is provided in the second cover body 622 close to the joint between the first cover body 621 and the seat 61, so that a flowing state of the reagent can be controlled by means of a rotating state of the first cover body 621 and the seat 61, so as to improve the staining effect. Of course, in other embodiments, the first cover body 621 and the seat 61 may perform an ascending and descending motion in a vertical direction, which is not specially limited herein.

In some embodiments, as shown in FIG. 38, specifically, in this embodiment, the first cover body 621 is of an annular structure, the first cover body 621 is provided with an insertion groove 6211 in its own length direction, the second cover body 622 is inserted into the insertion groove 6211, and a bottom of the second cover body 622 is exposed from the annular structure of the first cover body 621 and extends out of one side of the first cover body 621 close to the seat 61 to form a staining cavity with the seat 61. Therefore, under the squeezing of a thicker slide 200, the second cover body 622 can overcome elasticity of the third elastic member 63 to form a staining cavity suitable for the thickness of the slide 200 with the seat 61. For a thinner slide 200, the second cover body 622 can move towards the seat 61 under the elastic action of the third elastic member 63 to form a staining cavity suitable for the thickness of the slide 200, and the second cover body 622 is closely attached to the slide 200.

In some embodiments, the third elastic member 63 comprises an elastic body 631 and an engagement body 632 connected to a first end of the elastic body 631, and a second end of the elastic body 631 is connected to a top wall of the insertion groove 6211; the second cover body 622 is provided with an engagement groove 6222; and when the second cover body 622 is pushed into the insertion groove 6211, the engagement body 632 is engaged in the engagement groove 6222. It may be understood that when the second cover body 622 is pushed into the insertion groove 6211 until the engagement groove 6222 corresponds to the engagement body 632, the engagement body 632 is engaged into the engagement groove 6222, so that the position of the second cover body 622 relative to the insertion groove 6211 can be positioned so as to mount the second cover body 622 in place, and through the engagement of the engagement body 632 in the engagement groove 6222, the push-pull handfeel can be improved. Specifically, in this embodiment, the elastic body 631 may be a component having elastic properties such as a spring, which is not specially limited herein.

In some embodiments, the engagement body 632 is arc-shaped, and the engagement groove 6222 is an arc-shaped groove adapted to the shape of the engagement body 632. It may be understood that arc-shaped fit is formed between the engagement body 632 and the engagement groove 6222, so that the engagement body 632 can smoothly slide into the engagement groove 6222 for positioning; and the engagement body 632 can smoothly slide out of the engagement groove 6222 under the action of an external force, thereby facilitating disassembly and assembly.

In some embodiments, four third elastic members 63 are provided, and the four third elastic members 63 are dispersedly arranged in the insertion groove 6211; and the second cover body 622 is provided with four engagement grooves 6222, and the engagement grooves 6222 are arranged in a one-to-one correspondence with the third elastic members 63. It may be understood that with the provision of the four third elastic members 63 that are dispersedly arranged around the insertion groove 6211, the second cover body 622 can be uniformly stressed to form a staining cavity suitable for the size of the slide 200 with the seat 61, thereby effectively avoiding affecting the staining effect and providing the characteristics of simple structure. Of course, in other embodiments, there may be a different number of third elastic members 63 and a different number of engagement grooves 6222, such as three or five, which is not specially limited herein.

In some embodiments, as shown in FIGS. 41 and 42, an annular sealing body 6223 is arranged on one side of the second cover body 622 close to the staining cavity; and the annular sealing body 6223 is in sealed contact with the seat 61 to form a staining cavity. It may be understood that during the covering or opening of the first cover body 621 relative to the seat 61, the staining cavity formed between the second cover body 622 and the slide 200 gradually becomes larger or smaller, and the annular sealing body 6223 can cooperate with the seat 61 to form a semi-closed state in the process of the staining cavity gradually becoming larger or smaller, thus effectively preventing the reagent from leaking out of the slide 200 during spreading or gathering, reducing use costs, and improving the staining efficiency and effects. Specifically, in this embodiment, the annular sealing body 6223 may be a silicone sealing ring, which may be formed by performing a secondary injection molding on the second cover body 622.

In some embodiments, the annular sealing body 6223 is provided with a second notch 6225 at one end away from the sample introduction hole 6221, and the second notch 6225 is configured to gradually exhaust air from the staining cavity when the staining cavity formed between the second cover body 622 and the slide 200 is gradually becoming smaller, so as to prevent the existence of the air from affecting the injection and flow of the reagent when the second cover body 622 closely covers the slide 200.

In some embodiments, the second cover body 622 is provided with at least one protrusion 6224 in the annular sealing body 6223, the protrusions 6224 are dispersedly arranged on the second cover body 622, and the height of the protrusions 6224 is less than the height of the annular sealing body 6223, such that when the second cover body 622 is completely pressed against the slide 200, a proper gap is still maintained between the second cover body 622 and the slide 200 to store the reagent. Specifically, in this embodiment, six protrusions 6224 are uniformly arranged on the second cover body 622, and the height of the protrusions 6224 is about 0.1 mm, such that a uniform gap can be formed between the second cover body 622 and the slide 200 to store the reagent. Of course, in other embodiments, there may be a different number of protrusions 6224 with different heights, which is not specially limited herein.

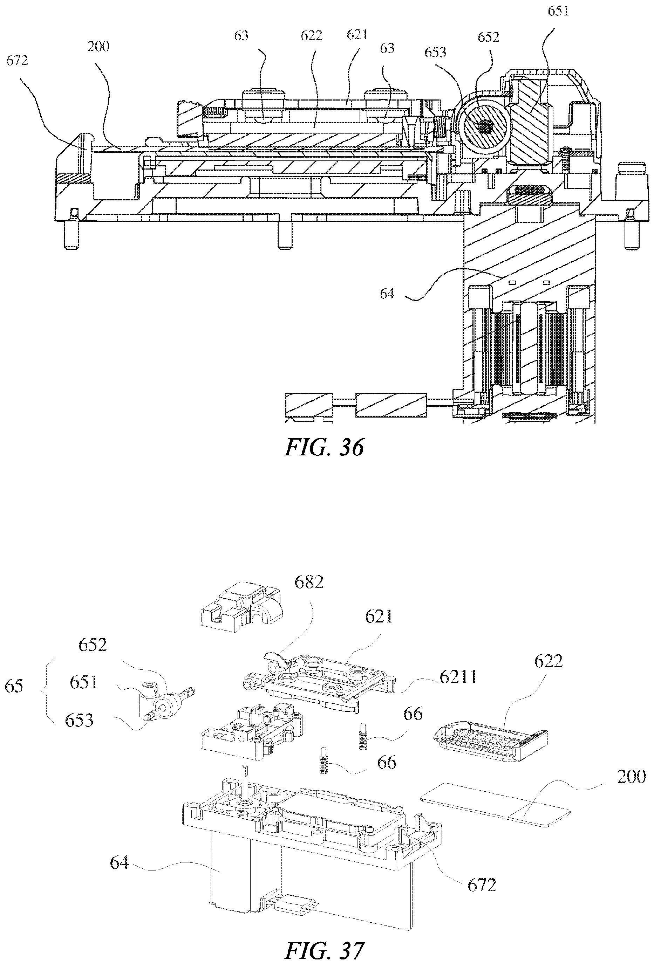

In some embodiments, as shown in FIGS. 36 and 37, the staining module 6 further comprises a driving device 64 and a transmission device 65 that are connected to the seat 61, an output end of the driving device 64 is connected to an input end of the transmission device 65, and an output end of the transmission device 65 is connected to the first cover body 621; and the driving device 64 drives the transmission device 65 to drive the first cover body 621 to rotate around the joint between the first cover body itself and the seat 61. It may be understood that the driving device 64 drives the first cover body 621 to rotate relative to the seat 61 through transmission of the transmission device 65, so that the driving device 64 at a different position can drive the first cover body 621 to rotate, thus improving the structural flexibility and reducing the structural accuracy, thereby reducing costs.

In some embodiments, the transmission device 65 comprises a rotating shaft 653, and a worm wheel 652 and a worm 651 arranged to mesh with each other, and the worm wheel 652 is connected to the first cover body 621 via the rotating shaft 653; and the output end of the driving device 64 is connected to the worm 651 and drives the worm 651 to rotate, such that the worm 651 drives the worm wheel 652 meshing with the worm itself to rotate, and when rotating, the worm wheel 652 drives the first cover body 621 to rotate by means of the rotating shaft 653. It may be understood that through the cooperation and transmission of the worm wheel 652 and the worm 651, the first cover body 621 can rotate from a horizontal state relative to the seat 61 to a vertical state relative to the seat 61. The horizontal state is a limit state of the first cover body 621 covering the seat 61, and the vertical state is a limit state of the first cover body 621 being opened relative to the seat 61. Therefore, through the cooperation and transmission of the worm wheel 652 and the worm 651, the first cover body 621 can be opened at a larger angle relative to the seat 61, thereby facilitating cleaning or maintenance upon the completion of the staining.

In some embodiments, the driving device 64 comprises an electric motor, and the electric motor is vertically arranged on the seat 61. The worm 651 is arranged on an output shaft of the electric motor and extends out of a top end of the seat 61, the worm wheel 652 is arranged at the top end of the seat 61 in a width direction of the seat 61, and the first cover body 621 is arranged at the top end of the seat 61 and is connected to the rotating shaft 653. It may be understood that through the arrangement of the electric motor at a side edge of the seat 61, the arrangement of the cover 62 at the top end of the seat 61, and transmission connection by means of the transmission device 65, compactness of the overall structure can be improved.

In some embodiments, as shown in FIGS. 36 and 37, the staining module 6 further comprises a fourth elastic member 66. Two ends of the fourth elastic member 66 respectively abut against the first cover body 621 and the seat 61; and the fourth elastic member 66 is located between the rotating shaft 653 and the staining cavity. It may be understood that the fourth elastic member 66 can generate an upward acting force on the first cover body 621, and the acting force can offset a backlash between the worm wheel 652 and the worm 651, thereby effectively ensuring the angular accuracy and stability of the first cover body 621. Specifically, in this embodiment, two fourth elastic members 66 are provided, and the two fourth elastic members 66 are arranged on two opposite sides of the first cover body 621, to apply a uniform acting force to the first cover body 621. Each fourth elastic member 66 may comprise a spring vertically arranged on the seat 61, and an insertion pin arranged at an end of the spring. The fourth elastic member 66 formed by the cooperation of the spring and the insertion pin has good elastic properties and can abut against the first cover body 621 and apply an acting force to the first cover body 621.

In some embodiments, as shown in FIGS. 34, 39 and 40, a retaining assembly 67 is arranged on one side of the seat 61 close to the cover 62; and the retaining assembly 67 forms a retaining groove for retaining the slide 200, and the second cover body 622 covers the retaining groove to form a staining cavity. It may be understood that by provision of the retaining groove, the slide 200 can be positioned and stably retained, thereby effectively preventing the case that when the second cover body 622 rotates away from the seat 61, the slide 200 is driven to move, which affects the staining effect.

In some embodiments, the retaining assembly 67 comprises a first retaining member 671 arranged on the seat 61 close to the joint between the first cover body 621 and the seat 61, and a second retaining member 672 arranged on the seat 61 and opposite to the first retaining member 671, and the first retaining member 671 is of an elastic structure. It may be understood that when the slide 200 is inserted along the second retaining member 672 in a direction of the first retaining member 671, a front end of the slide 200 abuts against the first retaining member 671, and a rear end of the slide 200 abuts against the second retaining member 672. The elasticity of the first retaining member 671 enables the slide 200 to be firmly retained in the retaining groove formed between the first retaining member 671 and the second retaining member 672, and the slide 200 can fall off relative to the retaining groove by continuing to overcome the elasticity of the first retaining member 671, so that the slide can be taken conveniently and quickly. It should be noted that a buffer material is provided at a part where the first retaining member 671 abuts against the slide 200, to avoid damaging the slide 200. Specifically, the first retaining member 671 may comprise a spring transversely arranged on the seat 61 and a rubber block arranged at an end of the spring. The first retaining member 671 formed by the cooperation of the spring and the rubber block has good elastic properties, and forms a buffer during contact with the slide 200, so that the damage to the slide 200 can be reduced. In addition, two first retaining members 671 are provided, and the two first retaining members 671 are arranged on the seat 61 side-by-side, such that the two first retaining members 671 jointly elastically abut against the slide 200.

In some embodiments, as shown in FIGS. 34, 37 and 39, the staining module 6 further comprises a calibration assembly 68. The calibration assembly 68 comprises a photoelectric switch 681 and a baffle 682, and the photoelectric switch 681 controls an electrical state of the driving device 64. The photoelectric switch 681 is arranged on the seat 61 and within a rotation travel of the first cover body 621, and the baffle 682 is arranged on the first cover body 621. The baffle 682 partially extends out of one side of the first cover body 621 that is connected to the seat 61. When the first cover body 621 drives the baffle 682 to rotate to the photoelectric switch 681, the baffle 682 blocks the photoelectric switch 681 to turn off the photoelectric switch 681. It may be understood that when the first cover body 621 rotates by a preset angle until the baffle 682 blocks the photoelectric switch 681, this position is a reset position during calibration. Specifically, in this embodiment, when the first cover body 621 rotates to be inclined an angle of 30 degrees relative to the seat 61, the baffle 682 blocks the photoelectric switch 681. In this case, a calibrated reset position is provided.

In some embodiments, as shown in FIGS. 37 and 40, the seat 61 comprises a base 611, a heating body 612, and a heat conduction plate 613. The base 611 is provided with a mounting groove, and the heating body 612 is accommodated in the mounting groove. The heat conduction plate 613 is stacked on the heating body 612. The heat conduction plate 613 covers the mounting groove, and a staining cavity is formed between the heat conduction plate 613 and the second cover body 622. It may be understood that, with the arrangement of the heating body 612 on the base 611, the heating body 612 can transfer heat to the staining cavity to heat the slide 200 to a proper temperature, so as to provide a necessary temperature for reaction or staining. It should be noted that a guide groove is formed on a side of the heat conduction plate 613 away from the heating body 612, and the heating body 612 is configured to limit the slide 200 by means of the guide groove, thereby facilitating accurate positioning and fixing of the slide 200. In addition, the heating body 612 is fixed to a bottom of the heat conduction plate 613 by means of hot pressing.

The present invention further provides a tissue section staining method applied to an automatic staining system 100 described above, the method comprising the following steps.

In step 1, a slide, which carries a pathological section, is loaded onto a staining device 2.

In step 2, at least one staining device 2 is controlled to independently move into a pushed-in state or a pushed-out state relative to the remaining staining devices along a first channel 11 of a mounting frame 1.

In step 3, a tissue staining operation is performed when the staining device 2 moves into the pushed-in state relative to the first channel 11.

The tissue section staining operation is stopped when the staining device 2 moves into the pushed-out state relative to the first channel 11.

To sum up, according to a control method for the automatic staining system 100, the mounting frame 1 and the at least one staining device 2 are provided, the mounting frame 1 is provided with the at least one first channel 11, and each staining device 2 is independently and movably inserted into one first channel 11, such that each staining device 2 independently forms a staining unit, and according to staining requirements, any staining device 2 can be independently pulled out of one of the first channels 11. In this case, the staining device 2 pulled out stops the tissue section staining operation, and can perform a treatment before staining or after staining, such as an operation of loading, unloading or cleaning. In this case, the other staining devices 2 which are not pulled out relative to the first channels 11 are not affected, and can still be inserted into the first channels 11 for independent staining operations without affecting each other, so that instrument resources can be fully used, working efficiency can be improved, the use flexibility of the automatic staining system 100 can be improved, and an influence on the result of staining can be effectively avoided, thereby preventing a section from scrapping.

When the drawing is cited for description, it is intended to explain new features. In order to avoid the description not concise enough caused by repeated citing of the drawing, the drawing will not be cited for the described feature one by one when the description is clear.

The purpose of the above embodiments is to exemplarily reproduce and derive the technical solution of the present invention, and to describe the technical solution, purpose, and effect of the present invention completely. The purpose is to make the public understand the disclosure of the present invention more thoroughly and completely, and the scope of protection of the present invention is not limited herein.

The above embodiments are also not an exhaustive list based on the present invention. In addition, there may also be many other embodiments that are not listed. Any substitution and improvement made without violating the concept of the present invention shall fall within the scope of protection of the present invention.

## Claims

1. An automatic staining system, **characterized by** comprising a mounting frame and at least one staining device, wherein
the mounting frame is provided with at least one first channel; and the staining devices are arranged in a one-to-one correspondence with the first channels, and each staining device is independently and movably inserted into one first channel.

2. The automatic staining system according to claim 1, **characterized by** further comprising at least one reagent storage device, wherein
the mounting frame is further provided with at least one second channel; and the reagent storage devices are arranged in a one-to-one correspondence with the second channels, and each reagent storage device is independently and movably inserted into one second channel.

3. The automatic staining system according to claim 1, **characterized by** further comprising a first sliding pair, wherein the first sliding pair comprises a first slide rail and a first sliding member; and
the first slide rail is arranged in the first channel, the staining device is arranged on the first sliding member, and the first sliding member is slidably arranged in the first slide rail.

4. The automatic staining system according to claim 1, **characterized in that** the mounting frame is provided with a first magnetic member at an inner end of the first channel, the staining device is provided with a second magnetic member magnetically cooperating with the first magnetic member, and the staining device is magnetically positioned with the first magnetic member by means of the second magnetic member after being pushed into the first channel.

5. The automatic staining system according to claim 1, **characterized in that** the mounting frame is further provided with a buffer member that is at the same level as the staining device at the inner end of the first channel, and the staining device abuts against the buffer member after being pushed into the first channel.

6. The automatic staining system according to any one of claims 1 to 5, **characterized by** further comprising a first self-locking device, wherein when the staining device is pushed into the first channel and/or pushed out of the first channel, the staining device and the mounting frame form a locked state by means of the first self-locking device.

7. The automatic staining system according to any one of claims 1 to 5, **characterized by** further comprising a damping device, wherein the damping device comprises a first gear and a second gear, the first gear is arranged at the mounting frame and is located in the first channel, the second gear is arranged on the staining device, and the staining device rotates with the mounting frame by meshing the first gear with the second gear.

8. The automatic staining system according to claim 1, **characterized in that** the staining device comprises a push-pull device; the push-pull device comprises a push-pull body and a panel; and
the push-pull body is movably arranged in the first channel, the panel is arranged at an outer end of the push-pull body, the panel is arranged outside the first channel, and at least a partial structure of the panel is movable to a first position or a second position relative to the push-pull body.

9. The automatic staining system according to claim 8, **characterized in that** the panel comprises a first push body arranged in a height direction of the push-pull body and a second push body rotatably connected to the first push body, and the first push body is connected to the push-pull body; and when the push-pull body is in a pulled-out state or a pushed-in state, the second push body rotates to the first position or the second position.

10. The automatic staining system according to claim 9, **characterized in that** the push-pull device further comprises a swinging device connected to the second push body, the swinging device drives the second push body to flip between the push-pull body and the first push body, a limit position of the second push body when flipped to approach the push-pull body is the first position, and a limit position of the second push body when flipped to approach the first push body is the second position.

11. The automatic staining system according to claim 10, **characterized in that** the swinging device comprises a linkage assembly, a first guide member, and a second guide member; the first guide member is arranged in the first channel, and the second guide member is arranged on the second push body; and
the linkage assembly is connected to the push-pull body, a first end and a second end of the linkage assembly are respectively in contact with the first guide member and the second guide member, and when the push-pull body moves along the first channel, the first end of the linkage assembly moves along the first guide member to drive the second end of the linkage assembly to move along the second guide member so as to drive the second push body to flip.

12. The automatic staining system according to claim 11, **characterized in that** the first guide member has a first bevel portion, and the height of a first end of the first bevel portion close to the panel is less than the height of a second end of the first bevel portion away from the panel;
the first end of the linkage assembly has a first moving portion, and the second end thereof has a second moving portion;
the second guide member has a second bevel portion obliquely arranged in an extension direction from the first push body to the second push body, and the height of a first end of the second bevel portion close to the first push body is less than the height of a second end of the second bevel portion away from the first push body; and when the push-pull body moves along the first channel, the first moving portion moves along the first bevel portion to drive the linkage assembly to move up and down, and the second end of the linkage assembly moves along the second bevel portion by means of the second moving body to drive the second push body to swing.

13. The automatic staining system according to claim 9, **characterized in that** the push-pull device further comprises a torsion structure;
the torsion structure comprises a rotating shaft and a torsion spring, and the second push body is rotatably connected to the first push body by means of the rotating shaft; and joints of the first push body and the second push body on a side close to the push-pull body are connected to each other via the torsion spring, such that the second push body forms a torsion force for flipping towards the push-pull body.

14. The automatic staining system according to claim 2, **characterized in that** the reagent storage device comprises a rack, at least one reading module, and at least one transmitting module; the rack is movably inserted into the second channel; the reading module is arranged on the mounting frame and corresponds to the second channel; and
the at least one transmitting module is arranged on the rack, and when the rack moves to below the reading module, the reading module is arranged opposite the transmitting module.

15. The automatic staining system according to claim 14, **characterized by** further comprising a second sliding pair, wherein the second sliding pair comprises a second slide rail and a second sliding member; and the second slide rail is arranged on the second channel, the rack is arranged on the second sliding member, and the second sliding member is slidably arranged in the second slide rail.

16. The automatic staining system according to claim 14, **characterized in that** the reading module is an RFID reading module; and the transmitting module is an RFID chip.

17. The automatic staining system according to claim 14, **characterized by** further comprising a locking device, wherein when the rack is pushed into the second channel and/or pushed out of the second channel, the rack and the mounting frame form a locked state by means of the locking device.

18. The automatic staining system according to claim 14, **characterized in that** the mounting frame is provided with an optocoupler switch inside the second channel, and the optocoupler switch is configured to detect whether the rack is pushed inwardly to an inner end of the second channel.

19. The automatic staining system according to claim 2, **characterized in that** the reagent storage device comprises a reagent bottle; the reagent bottle comprises a body, a bottle cap, a first fitting member, and a second fitting member;
the body has an accommodating cavity and a first opening in communication with the accommodating cavity, and the bottle cap movably covers the first opening of the body;
the first fitting member is arranged on the body, and the second fitting member is arranged on the bottle cap; and when the bottle cap moves to be opened relative to the first opening of the body, the bottle cap is fixed to the body by fitting the second fitting member with the first fitting member.

20. The automatic staining system according to claim 19, **characterized in that** the reagent bottle further comprises a connecting member, and the connecting member is at least partially of a flexible and bendable structure; and the bottle cap is in hinged connection with the body by means of the connecting member.

21. The automatic staining system according to claim 20, **characterized in that** an outer wall of the body on a side close to the connecting member is provided with an engagement groove, and the engagement groove is the first fitting member; the bottle cap is provided with an engagement block, and the engagement block is the second fitting member; and the body is connected to the outer wall of the body by engaging the engagement block with the engagement groove.

22. The automatic staining system according to claim 19, **characterized in that** the body comprises a bottle body and a connecting body, wherein the bottle body has the accommodating cavity, and the connecting body is detachably sleeved at a bottle mouth end of the bottle body; and one end of the connecting body away from the bottle mouth end is provided with the first opening in communication with the accommodating cavity, and the first fitting member is arranged at a side wall of the connecting body.

23. The automatic staining system according to claim 22, **characterized in that** the body further comprises a sealing member; and the sealing member is detachably inserted into the bottle mouth end of the bottle body, and the sealing member is arranged in the connecting body.

24. The automatic staining system according to claim 22, **characterized in that** one end of the connecting body close to the bottle body is provided with a first notch, a rotation stopping boss is arranged at the bottle mouth end of the bottle body, and the connecting body moves until the first notch abuts against the rotation stopping boss, to form a relatively fixed state with the bottle body.

25. The automatic staining system according to claim 24, **characterized in that** an outer wall of the connecting body on a side opposite to the first notch is provided with an anti-loosening rib, and an outer wall of the bottle body on a side opposite to the rotation stopping boss is provided with an anti-loosening boss; and
when the first notch abuts against the rotation stopping boss, the anti-loosening rib abuts against the anti-loosening boss, and the first notch and the anti-loosening rib are both located between the rotation stopping boss and the anti-loosening boss.

26. The automatic staining system according to claim 2, **characterized in that** the reagent storage device comprises a reagent bottle; the reagent bottle comprises a body, a bottle cap, a first fitting member, and a second fitting member;
the body has an accommodating cavity and a first opening in communication with the accommodating cavity;
the bottle cap comprises a first cap member and a second cap member movably covering the first cap member, the first cap member covers the first opening of the body, the first fitting member is arranged on the first cap member, and the second fitting member is arranged on the second cap member; and when the second cap member moves to be opened relative to the first cap member, the first cap member is fixed to the second cap member by fitting the first fitting member with the second fitting member.

27. The automatic staining system according to claim 1, **characterized by** further comprising a liquid tank arranged on the mounting frame, wherein a weighing device is arranged between the liquid tank and the mounting frame.

28. The automatic staining system according to claim 27, **characterized in that** the weighing device comprises a fixed portion, a movable portion, and a weighing sensor; the movable portion is movably arranged on the fixed portion, and the liquid tank is arranged on the movable portion; and
the mounting frame is provided with a third channel, the fixed portion is arranged in the third channel by means of the weighing sensor, and the movable portion is movably pulled in the third channel in an extension direction of the fixed portion.

29. The automatic staining system according to claim 28, **characterized in that** the weighing device comprises a third sliding pair; the third sliding pair comprises a third slide rail and a third sliding member; and
the third slide rail is arranged on the mounting frame in an extension direction of the third channel, the third slide rail is the fixed portion, the third sliding member is slidably arranged in the third slide rail, and the third sliding member is the movable portion.

30. The automatic staining system according to claim 28, **characterized in that** four weighing sensors are provided, which are uniformly arranged around the fixed portion.

31. The automatic staining system according to claim 28, **characterized by** further comprising a second self-locking device and a supporting member, wherein the liquid tank is arranged on the movable portion by means of the supporting member; and
the second self-locking device comprises a locking groove body and a locking member; the locking groove body or the locking member is arranged at an inner end and/or an outer end of the fixed portion, the locking member or the locking groove body is arranged at an inner end and/or an outer end of the supporting member, and when the supporting member is pushed and pulled until the locking member corresponds to the locking groove body, the locking member is locked to the locking groove body.

32. The automatic staining system according to claim 1, **characterized in that** the staining device comprises a staining module arranged on the mounting frame; the staining module comprises a cover, and the cover comprises a first cover body; and the first cover body is provided with an insertion groove, a third elastic member is arranged in the insertion groove, and an elastic travel space for the third elastic member is provided in the insertion groove.

33. The automatic staining system according to claim 32, **characterized in that** the cover further comprises a second cover body, the second cover body is inserted into the insertion groove, two ends of the third elastic member respectively elastically abut against the second cover body and a groove wall of the insertion groove, and the height of the insertion groove is greater than the thickness of the second cover body.

34. The automatic staining system according to claim 33, **characterized in that** the staining module further comprises a seat; the first cover body is movably connected to the seat; and when the first cover body moves to cover the seat, a staining cavity is formed between the second cover body and the seat, and the second cover body is provided with a sample introduction hole in communication with the staining cavity.

35. The automatic staining system according to claim 34, **characterized in that** a first end of the first cover body is connected to the seat, and the first cover body rotates around a joint between the first cover body itself and the seat; and
the sample introduction hole of the second cover body is provided in the second cover body close to the joint between the first cover body and the seat.

36. The automatic staining system according to claim 33, **characterized in that** the third elastic member comprises an elastic body and an engagement body connected to a first end of the elastic body, and a second end of the elastic body is connected to a top wall of the insertion groove; the second cover body is provided with an engagement groove; and when the second cover body is inserted into the insertion groove, the engagement body is engaged in the engagement groove.

37. The automatic staining system according to claim 36, **characterized in that** the engagement body is arc-shaped, and the insertion groove is an arc-shaped groove adapted to the shape of the engagement body.

38. The automatic staining system according to claim 34, **characterized in that** the staining module further comprises a driving device and a transmission device that are connected to the seat, an output end of the driving device is connected to an input end of the transmission device, and an output end of the transmission device is connected to the first cover body; and the driving device drives the transmission device to drive the first cover body to rotate around the joint between the first cover body itself and the seat.

39. The automatic staining system according to claim 38, **characterized in that** the transmission device comprises a rotating shaft, and a worm wheel and a worm arranged to mesh with each other, and the worm wheel is connected to the first cover body via the rotating shaft; and
the output end of the driving device is connected to the worm and drives the worm to rotate, such that the worm drives the worm wheel meshing with the worm itself to rotate, and when rotating, the worm wheel drives the first cover body to rotate by means of the rotating shaft.

40. The automatic staining system according to claim 39, **characterized in that** the staining module further comprises a fourth elastic member, wherein two ends of the fourth elastic member respectively abut against the first cover body and the seat, and the fourth elastic member is located between the rotating shaft and the staining cavity.

41. A tissue section staining method, **characterized in that** the method is applied to an automatic staining system according to claim 1, and comprises the following steps:
loading a slide, which carries a pathological section, onto a staining device;
controlling at least one staining device to independently move into a pushed-in state or a pushed-out state relative to the remaining staining devices along a first channel of a mounting frame;
performing a tissue section staining operation when the staining device moves into the pushed-in state relative to the first channel; and
stopping the tissue section staining operation when the staining device moves into the pushed-out state relative to the first channel.
